(19) Europäisches Patentamt
European Patent Office
Office européen des brevets

(11) **EP 4 371 846 B1**

(12) **EUROPEAN PATENT SPECIFICATION**

(45) Date of publication and mention
of the grant of the patent:
**24.09.2025 Bulletin 2025/39**

(21) Application number: **22208108.5**

(22) Date of filing: **17.11.2022**

(51) International Patent Classification (IPC):
*B61F 5/00* (2006.01)       *B60B 17/00* (2006.01)
*B61H 5/00* (2006.01)       *F16D 65/00* (2006.01)
*F16D 65/12* (2006.01)       *F16F 15/12* (2006.01)
*F16F 15/14* (2006.01)

(52) Cooperative Patent Classification (CPC):
**B61F 5/00; B60B 17/0024; B61H 5/00;**
**F16D 65/124; F16F 15/1421;** F16F 2230/0058;
F16F 2236/08; F16F 2238/022

(54) **VIBRATION DAMPING ARRANGEMENT FOR A RAIL VEHICLE**

SCHWINGUNGSDÄMPFENDE ANORDNUNG FÜR EIN SCHIENENFAHRZEUG

DISPOSITIF D'AMORTISSEMENT DES VIBRATIONS POUR UN VÉHICULE FERROVIAIRE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**22.05.2024 Bulletin 2024/21**

(73) Proprietor: **ALSTOM Transportation Germany**
**GmbH**
**10785 Berlin (DE)**

(72) Inventor: **BIEKER, Guido**
**57399 Kirchhundem (DE)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**EP-A1- 2 960 133       EP-A1- 2 960 544**
**EP-B1- 1 551 646**

# EP 4 371 846 B1

**Description**

<u>BACKGROUND OF THE INVENTION</u>

The present invention relates to a running gear unit, in particular for a rail vehicle, comprising a wheel unit and a torsional vibration reduction mass unit. The wheel unit comprises a wheel unit shaft and at least one wheel, wherein the wheel unit shaft defines an axis of rotation, the axis of rotation defining an axial direction and a radial direction of the wheel unit as well as a circumferential direction about the axis of rotation. The wheel is coupled to the wheel unit shaft in a manner torsionally rigid about the axis of rotation and is configured to run on a track. The torsional vibration reduction mass unit comprises a torsional vibration reduction mass coupled to the wheel unit in a manner torsionally compliant about the axis of rotation via at least one torsional linking arrangement, in particular, via a plurality of such torsional linking arrangements distributed along the circumferential direction. The torsional vibration reduction mass is configured to oscillate about the axis of rotation in counter-phase with respect to a component of the wheel unit, in particular, with respect to the wheel, to reduce torsional vibration of the wheel unit. The torsional vibration reduction mass unit defines a reduction resonant frequency of the counter-phase oscillation of the torsional vibration reduction mass. The torsional linking arrangement is compliant in the circumferential direction and comprises a first support element, a second support element, and a spring unit with at least one spring element. The first support element is connected to one of the wheel unit and the torsional vibration reduction mass in a manner rigid in the circumferential direction. The second support element is connected to the other one of the wheel unit and the torsional vibration reduction mass in a manner rigid in the circumferential direction. The at least one spring element is arranged and acts kinematically in series between the first support element and the second support element to provide the compliance of the linking arrangement at least in a first torsional direction along the circumferential direction. The present invention also relates to a corresponding method of reducing torsional vibration in a running gear unit.

The wheel unit (typically a wheel set, a wheel pair but also single wheel units) typically is a crucial component in the design of a running gear for a rail vehicle. Beyond the traction and/or braking torques that have to be transmitted via the wheel unit to transmit the desired traction and/or braking power from the drive unit to the rail, typically, generally undesired mutual torsional vibrations between rotating masses connected to the wheel unit (e.g. between the wheels of a wheel set or between a wheel and the rotor of a driving motor in a single wheel unit) about the axis of rotation of the wheel set lead to high additional loads to the wheel unit shaft and the connection, typically a press fit, between the respective wheel and the wheel unit shaft.

These additional torsional moments (generated as a result of such torsional vibrations), unless actively or passively counteracted, may obtain such a level that the structural integrity of the wheel unit cannot be maintained and, in particular, the wheel may execute a rotational slipping motion on the wheel unit shaft at the level of the press fit between wheel and shaft. An active approach in counteracting such torsional vibrations obviously lies in the traction and braking controller design, which strives to detect and counteract such torsional vibration events at a very early stage. However, such rapid torsional vibration detection requires highly sophisticated controller architecture and one or more suitable sensors allowing detection. Moreover, such torsional vibration events typically build up rapidly (typically within a few tenths of a second and at a frequency of 25 Hz to 150 Hz, typically 35 Hz to 95 Hz), which adds to the complexity of the complexity of the control architecture.

Generic passive approaches in counteracting such torsional vibrations are known, for example, from DE 103 36 729 A1 (Haban), EP 1 551 646 B1 (Bieker et al.), and EP 2 960 133 A1 (Bieker).

These documents propose the use of passive torsional vibration reduction masses (such as e.g. brake discs) coupled in a manner torsionally compliant to the wheels of a wheel set, such that they can execute counter-phase oscillation which reduces the resulting amplitude of the torsional moments generated in the event of torsional vibration in the wheel set. To do so, EP 1 551 646 B1 (Bieker et al.) and EP 2 960 133 A1 (Bieker) mostly rely on spring elements located in a recess of the brake disc otherwise typically receiving a sliding block providing a torsionally rigid connection between the brake disc and the wheel. These solutions, however, have the disadvantage that they are either compact but are relatively complicated to tune to desired resonant frequencies (due to their compactness), such as is the case with EP 1 551 646 B1 (Bieker et al.), or that they are less complicated to tune to desired resonant frequencies, but require a considerable amount of space in the brake disc, such as is the case with EP 2 960 133 A1 (Bieker).

<u>BRIEF DESCRIPTION OF THE INVENTION</u>

The object for the present invention is therefore to provide a running gear unit and a method of reducing torsional vibration in a running gear unit of the type mentioned initially, which does not or at least to a lesser degree have the disadvantages mentioned above and which, in particular, in a simple and reliable manner allows efficient torsional vibration reduction.

The present invention solves this problem with a running gear unit according claim 1. The present invention

2

further solves this problem with a method according claim 15.

The present invention is based on the technical teaching that, in a simple and reliable manner, efficient torsional vibration reduction may be achieved if the at least one spring element is an elongated element with an elongated spring section which is elongated along the axial direction and, for providing the compliance of the linking arrangement, is bent about a bending axis which is at least substantially parallel to a plane defined by the radial direction and the circumferential direction (or, in other words, which is least substantially parallel to a plane perpendicular to the axial direction). This configuration as an elongated bending spring has the great advantage that the comparatively large length along the axial direction allows for relatively simple adjustment of the compliance and, hence, the reduction resonant frequency of the counter-phase oscillation. At the same time, a large part of the elongated bending spring can be easily integrated with sufficient play into components of the arrangement, such as, for example, a web element of the wheel or a flange element on the wheel unit shaft which have a considerable dimension along the axial direction anyway and, therefore, easily accommodate a large part of the elongated bending spring. Hence, in a simple manner, a comparatively compact yet simple to tune configuration may be achieved.

Hence, according to one aspect, the present invention relates to a running gear unit, in particular for a rail vehicle, comprising a wheel unit and a torsional vibration reduction mass unit. The wheel unit comprises a wheel unit shaft and at least one wheel, wherein the wheel unit shaft defines an axis of rotation, the axis of rotation defining an axial direction and a radial direction of the wheel unit as well as a circumferential direction about the axis of rotation. The wheel is coupled to the wheel unit shaft in a manner torsionally rigid about the axis of rotation and is configured to run on a track. The torsional vibration reduction mass unit comprises a torsional vibration reduction mass coupled to the wheel unit in a manner torsionally compliant about the axis of rotation via at least one torsional linking arrangement, in particular, via a plurality of such torsional linking arrangements distributed along the circumferential direction. The torsional vibration reduction mass is configured to oscillate about the axis of rotation in counter-phase with respect to a component of the wheel unit, in particular, with respect to the wheel, to reduce torsional vibration of the wheel unit. The torsional vibration reduction mass unit defines a reduction resonant frequency of the counter-phase oscillation of the torsional vibration reduction mass. The torsional linking arrangement is compliant in the circumferential direction and comprises a first support element, a second support element, and a spring unit with at least one spring element. The first support element is connected to one of the wheel unit and the torsional vibration reduction mass in a manner rigid in the circumferential direction. The second support element is connected to the other one of the wheel unit and the torsional vibration reduction mass in a manner rigid in the circumferential direction. The at least one spring element is arranged and acts kinematically in series between the first support element and the second support element to provide the compliance of the linking arrangement at least in a first torsional direction along the circumferential direction. The at least one spring element comprises an elongated spring section which is elongated along the axial direction, wherein the spring section is arranged and configured to provide the compliance of the linking arrangement at least in the first torsional direction along the circumferential direction by a bending compliance about a bending axis which is at least substantially parallel to a plane defined by the radial direction and the circumferential direction.

It will be appreciated that the spring section, in principle, may have any desired elongated shape which allows achieving the bending deformation with the desired bending compliance to obtain the desired overall reduction resonant frequency of the counter-phase oscillation of the torsional vibration reduction mass. With preferred, particularly simple configurations, the spring section is rod shaped or plate shaped, in particular, formed by a leaf spring element. The spring section may have any desired and suitable shape and dimensions along the axial direction. In particular, the shape and/or dimensions may be at least section-wise uniform along the axial direction. With certain variants, the spring section tapers between the first support element and the second support element, thereby achieving a particularly beneficial deformation behavior of the spring element with a desirably low variation of the stresses within the spring element along the axial direction. With certain beneficial variants the spring section may taper from the first support element towards the second support element. It will be appreciated that the tapering along the axial direction may be provided by reducing the dimensions of the spring section in any desired and suitable direction transverse to the axial direction. With certain particularly simple yet efficient configurations, the spring section tapers by at least decreasing its dimension in the circumferential direction.

The introduction of the bending moment into the spring element can, in principle, be achieved in any desired and suitable way. For example, one of the first support element and the second support element may be formed monolithic with the spring element. With preferred, simple to manufacture variants, the spring section is elongated along a longitudinal axis of the at least one spring element and the at least one spring element is configured to contact at least one of the first support element and the second support element via at least one contact element. Contact can be made in any desired and suitable way. With some variants, the at least one contact element may protrude from the spring section in a direction transverse to the longitudinal axis of the at least one spring element, in particular, along the torsional or circumferential direction, respectively. With certain variants the at least one contact element, along the longitudinal axis of the at least one spring element, is located at a free end of the at least one spring element or at a central section of the at least one spring element, wherein, in particular, a first contact element is located at the central section and a second contact element is located at a free end of the at least one spring element. By this means, a very simple configuration may be achieved where the spring element may contact the wheel unit via the first contact element, a first torsional vibration reduction mass via the second contact element and a further torsional vibration reduction mass via a third contact element located at an opposite end of the spring element.

It will be appreciated that the respective contact element may be an element which is separate from the spring element and may be connected to the spring element in any desired and suitable way, for example, using (alone or in any desired combination) a frictional, a positive or an adhesive connection. With some variants, the at least one contact element is monolithically integrated into the at least one spring element, thereby yielding a very compact and stable connection.

It will be appreciated that the spring element may be the only spring element of the respective spring unit to achieve the torsionally compliant coupling. With preferred variants, there may be more than one spring element per spring unit. In principle, any desired number of spring elements may be used. Preferably there are at least two spring elements per spring unit (typically two to six spring elements), at least two of the spring elements acting in opposite torsional directions (along the circumferential direction). This has the advantage that the respective spring element may not be subject to alternating bending stresses per load cycle. This may reduce the risk of spring failure. Hence, with certain variants, the at least one spring element is a first spring element and the spring unit comprises a second spring element, wherein the second spring element is arranged and acts kinematically in series between the first support element and the second support element to provide the compliance of the linking arrangement in a second torsional direction along the circumferential direction and opposite to the first torsional direction.

It will be appreciated that the respective further spring element may have a different configuration than the (at least one) spring element. Preferably, however, the further spring element (e.g., the second spring element) may be configured in a manner at least substantially identical to the (at least one) spring element (e.g., the first spring element). By this means particularly simple configurations may be achieved showing easily scalable properties.

It will be appreciated that, in a neutral state of the running gear unit or the linking arrangement, respectively, (e.g., an unloaded state, where the torsional vibration reduction mass and the wheel unit are not deflected with respect to each other in the circumferential direction), the respective spring element may be in an unloaded and relaxed state. In this case, onset of the bending and the resulting spring force may be immediate with any torsional deflection from that neutral state or it may be delayed by a defined amount (e.g., due to a defined circumferential play between the respective spring element and one of the first and second support element). With certain variants, however, the first spring element and the second spring element are under a bending pre-stress about their respective bending axis in a neutral state of the linking arrangement. This has the advantage of ensuring a play-free configuration with an immediate onset of the spring force.

With certain variants, the spring unit may comprise a third spring element which is arranged and acts kinematically in parallel to the first spring element between the first support element and the second support element to provide the compliance of the linking arrangement in the first torsional direction. Here as well, the third spring element may have a different configuration than the first and/or second spring element. Again, preferably, the third spring element may be configured in a manner substantially identical to the first spring element.

With certain variants, the spring unit comprises a fourth spring element which is arranged and acts kinematically in parallel to the second spring element between the first support element and the second support element to provide the compliance of the linking arrangement in the second torsional direction, the fourth spring element. Here as well, the fourth spring element may have a different configuration than the first and/or second and/or third spring element. Again, preferably, the fourth spring element may be configured in a manner substantially identical to the second spring element.

It will be appreciated that, depending on the use case of the running gear unit, in principle, one torsional vibration reduction mass may be sufficient to achieve satisfactory torsional vibration reduction. With preferred variants, however, one or more further torsional vibration reduction masses may be used with the respective wheel unit or torsional vibration reduction mass unit, respectively. Hence, with certain variants, the torsional vibration reduction mass may be a first torsional vibration reduction mass and the torsional vibration reduction mass unit may comprise a further, second torsional vibration reduction mass. The further, second torsional vibration reduction mass is then coupled to the wheel unit in a manner torsionally compliant about the axis of rotation and configured to oscillate about the axis of rotation in counter-phase with respect to the component of the wheel unit to reduce torsional vibration of the wheel unit.

It will be appreciated that the further, second torsional vibration reduction mass may be coupled to the wheel unit via at least one or more further torsional linking arrangements, e.g., in the same manner and configuration as the first torsional vibration reduction mass, in particular, with one or more further linking arrangements that are at least essentially identical to the one or more linking arrangements for the first torsional vibration reduction mass. Preferably, the further, second torsional vibration reduction mass may be coupled to the wheel unit via the at least one torsional linking arrangement, in particular, via the plurality of the torsional linking arrangements. By this means, a very compact and efficient torsional vibration reduction configuration may be achieved.

It will be appreciated that the coupling of the further, second torsional vibration reduction mass may be achieved in any desired and suitable way. With certain variants, the torsional linking arrangement comprises a third support element connected to the second torsional vibration reduction mass in a manner rigid in the circumferential direction. The at least one spring element is then arranged and acts kinematically in series between the third support element and one of the first and second support element to provide compliance of the linking arrangement between the wheel unit and the second torsional vibration reduction mass at least in the first torsional direction along the circumferential direction. By this means, a highly compact configuration may be achieved which uses a low, possibly minimum number of different parts. In any case, the spring unit(s) and/or the linking arrangement(s) and/or the torsional vibration reduction masses may be respectively configured to be at least substantially symmetric with respect to the part of the wheel unit with the first support section.

With certain variants, the spring section is a first spring section and the at least one spring element comprises a second spring section which may then be used, for example, to provide torsionally compliant linking of the second torsional vibration reduction mass to the wheel unit. The second spring section may function in the same way as or in a different way than the first spring section. Preferably, the second spring section is configured to provide the compliance of the linking arrangement between the wheel unit and the second torsional vibration reduction mass also by a bending compliance about a bending axis which is at least substantially parallel to a plane defined by the radial direction and the circumferential direction.

As previously noted, the second spring section may at least essentially be configured in the same way as the first spring section. With certain variants, the second spring section may, for example, taper along a longitudinal axis of the at least one spring element, thereby achieving the same effects of such tapering as they have been described above for the spring section. Here, the second spring section may at least one of (i) taper towards the third support element and (ii) taper by at least decreasing its dimension in the circumferential direction. Again, the effects of these configurations have already been described above in general for the (first) spring section.

With certain variants, the at least one spring element may be configured to contact the third support element via a third contact element. This may be done in a similar or at least essentially the same manner as has been described above for either of the first and second contact element. Hence, in particular, the third contact element may at least one of (i) protrude from the spring section in a direction transverse to the longitudinal axis of the at least one spring element, (ii) protrude along the torsional direction, (iii) be located at a free end of the at least one spring element, and (iv) be monolithically integrated into the at least one spring element. Here as well, the effects of these configurations have already been described above in general for the (first) spring section.

It will be appreciated that the at least one spring element may be connected to the first support element in any desired and suitable way. For example, the at least one spring element may be connected to an outer surface of the first support element. With certain, overall highly compact and space-saving arrangements, the at least one spring element is at least partially received within a recess of the first support element. Here, the recess may be configured to receive at least part of the spring section with sufficient play at least in the circumferential direction such that the spring section can freely bend to provide the bending compliance about the bending axis. The recess may have any desired and suitable shape. Particularly simple and beneficial variants have a configuration where the recess is one of an elongated bore and an elongated slot of the first support element. With certain very compact and highly functionally integrated variants, the recess and/or the first support element may be formed to provide at least one hard stop section configured to limit bending of the at least one spring element about the bending axis during normal operation of the running gear unit. This may be particularly useful as it may ensure, in a very simple manner, that in certain cases (e.g., where the torsional vibration reduction mass is a brake disc) higher torsional moments (above a certain threshold) can be safely transmitted between the torsional vibration reduction mass and the wheel unit without overloading the at least one spring element.

It will be appreciated that, with certain variants, however, a rigidity of the at least one spring element may be selected such that a maximum torsional moment to be transmitted about the rotational axis between the torsional vibration reduction mass and the wheel unit during normal operation of the running gear unit is taken exclusively by elastic deformation of the at least one spring element of the at least one torsional linking arrangement. Hence, in other words, during normal operation, relative motion about the rotational axis between the torsional vibration reduction mass and the wheel unit is limited exclusively by the elastic deformation of the at least one spring element of the at least one torsional linking arrangement.

It will be appreciated that, in principle, via an corresponding configuration of the at least one spring element, any desired and suitable torsional deflection behavior between the torsional vibration reduction mass and the wheel unit during normal operation may be achieved. With certain variants, a rigidity of the at least one spring element may be selected such that a maximum torsional moment to be transmitted about the rotational axis between the torsional vibration reduction mass and the wheel unit during normal operation of the running gear unit causes a maximum deflection of the at least one spring element, in particular, in the torsional direction, by less than 1.0 mm, preferably less than 0.5 mm, more preferably 0.4 mm to 0.1 mm.

With certain variants, rather than (or possibly in addition to) limiting the torsional deflection between the torsional vibration reduction mass and the wheel unit via the at least one torsional linking arrangement, a hard stop unit is formed, in particular, by surfaces of the torsional vibration reduction mass and the wheel unit. The hard stop unit is configured to limit relative motion between the torsional vibration reduction mass and the wheel unit about the rotational axis if a predefined torsional moment, in particular, a maximum torsional moment, to be transmitted about the rotational axis between the torsional vibration reduction mass and the wheel unit during normal operation of the running gear unit is exceeded.

It will be appreciated that the at least one torsional linking arrangement preferably is configured to allow thermally induced expansion in the radial direction between the torsional vibration reduction mass and the wheel unit. This is beneficial in that it avoids stresses introduced into the arrangement upon thermal expansion of the components during operation.

It will be further appreciated that the torsional vibration reduction mass unit may be the only torsional vibration reduction mass unit mounted to the specific wheel unit. With certain variants, however, the torsional vibration reduction mass unit is a first torsional vibration reduction mass unit defining a first reduction resonant frequency, and a second torsional vibration reduction mass unit is connected to the wheel unit, the second torsional vibration reduction mass unit comprising a further torsional vibration reduction mass coupled to the wheel unit in a manner torsionally compliant about the axis of rotation. The second torsional vibration reduction mass unit defines a second reduction resonant frequency of a counter-phase oscillation of the further torsional vibration reduction mass, which is of the same order as the first reduction resonant frequency (i.e., not simply a frequency in the range of a higher or lower order resonant frequency of the first torsional vibration reduction mass unit) and has an intentional offset from the first reduction resonant frequency. The intentional offset preferably (and typically) exceeds an offset caused by maximum manufacturing tolerances defined for the running gear unit.

Hence, for example, one of the torsional vibration reduction mass units may be tuned to a state of the wheel unit (i.e., to a torsional resonant frequency of the wheel unit), which is at least close to the new or unworn state of the wheel unit, respectively, such that efficient passive torsional vibration reduction in this new or unworn state is achieved. The other torsional vibration reduction mass unit may then be tuned to a (later) used or worn state of the wheel unit, respectively, such that efficient passive torsional vibration reduction is also obtained at this later point in time of the lifecycle of the wheel unit. For example, the other torsional vibration reduction mass unit may be tuned to a state which is at least close to the fully worn state of the wheel unit (where exchange of the wheels of the wheel unit is required by the operator of the vehicle).

It will be appreciated that, with certain preferred variants, more than two torsional vibration reduction mass units with mutually offset reduction resonant frequencies may be provided, such that an even broader or improved coverage of the torsional vibration resonant frequency range (to be expected over the lifetime of the wheel unit) is obtained. Generally, as needed to provide proper torsional vibration reduction, an arbitrary number of such differently frequency tuned torsional vibration reduction mass units may be provided.

It should be noted again that, in the sense of the present invention, an intentional offset between two reduction resonant frequencies relates to an offset which is not merely caused by differences due to maximum manufacturing tolerances defined and acceptable, respectively, for the respective wheel unit. Rather, such an intentional offset caused by deliberate deviations in the design and/or arrangement of the respective torsional vibration reduction mass unit. Moreover, it will be appreciated that, in the sense of the present invention, such an intentional difference relates to mutually offset reduction resonant frequencies of the same order (e.g. of the first order) and not to differences between harmonics of different order.

As mentioned above, the respective reduction resonant frequency may be tuned or matched to arbitrary torsional vibration resonant frequencies or frequency ranges, respectively, the wheel unit may show over its lifecycle. Preferably, the at least one wheel has an unworn state and a fully worn state, where exchange of the at least one wheel is required by an operator of the running gear unit. The torsional vibration of the wheel unit has a first wheel unit resonant frequency in the unworn state and a second wheel unit resonant frequency in the fully worn state. Hence, the first wheel unit resonant frequency and the second wheel unit resonant frequency define a wheel unit lifetime resonant frequency gap.

In this case, preferably, the first reduction resonant frequency is located in the area of the first wheel unit resonant frequency, in particular, substantially corresponds to the first wheel unit resonant frequency. In addition or as alternative, the second reduction resonant frequency is located in the area of the second wheel unit resonant frequency, in particular, substantially corresponds to the second wheel unit resonant frequency.

The difference between the first and second reduction resonant frequency may be chosen as a function of the torsional vibration reduction to be achieved at specific points within the lifetime of the wheel unit. In particular, the respective reduction resonant frequency may be adapted to the severity or amplitude, respectively, of the torsional vibration, which may vary over the wheel unit resonant frequency range (i.e. the different wheel unit resonant frequencies that develop over the lifetime of the wheel unit). Hence, in some preferable cases, it may be provided that the reduction resonant frequencies are tuned to different wheel unit resonant frequencies where peak amplitudes of the torsional vibration are to be expected.

With certain preferred variants, the first reduction resonant frequency differs from the first wheel unit resonant frequency by at most 50%, preferably at most 25%, more preferably by at most 5% to 15%, of the wheel unit lifetime resonant frequency gap. In In addition or as an alternative, the first reduction resonant frequency differs from the first wheel unit resonant frequency by at most 30%, preferably at most 20%, more preferably by at most 5% to 15%, of the first wheel unit resonant frequency. With certain variants, the first reduction resonant frequency may at least substantially correspond to the first wheel unit resonant frequency. Either of these solutions has the advantage, that proper and elevated torsional vibration reduction is achieved in the initial part of the lifecycle of the wheel unit.

In addition or as an alternative, the second reduction resonant frequency preferably differs from the second wheel unit resonant frequency by at most 50%, preferably at most 25%, more preferably by at most 5% to 15%, of the wheel unit lifetime resonant frequency gap. In In addition or as an alternative, the second reduction resonant frequency differs from the second wheel unit resonant frequency by at most 30%, preferably at most 20%, more preferably by at most 5% to 15%, of the second wheel unit resonant frequency. With certain variants, the second reduction resonant frequency may at least substantially correspond to the second wheel unit resonant frequency. Either of these solutions has the advantage, that proper and elevated torsional vibration reduction is achieved in the terminal part of the lifecycle of the wheel unit.

Furthermore, in addition or as alternative, the second reduction resonant frequency differs from the first reduction resonant frequency by 20% to 100%, preferably 30% to 80%, more preferably by 40% to 70%, of the wheel unit lifetime resonant frequency gap. Such a solution has the advantage that proper and elevated torsional vibration reduction is achieved over a comparatively large torsional vibration frequency band.

With further preferred variants, the second reduction resonant frequency differs from the first reduction resonant frequency by at least 2%, preferably by 5% to 25%, more preferably by 10% to 20%, of the first reduction resonant frequency. In addition or as alternative, with certain preferred variants, the second reduction resonant frequency differs from the first reduction resonant frequency by at least 2 Hz, preferably by 5 Hz to 35 Hz, more preferably by 10 Hz to 20 Hz. In any of these cases, proper and elevated torsional vibration reduction is achieved for a wide range of the wheel unit resonant frequencies.

It will be appreciated that the actual value of the respective reduction resonant frequency is selected as a function of the respective wheel unit resonant frequency to be counteracted, i.e. as a function of the actual design of the respective wheel unit. With certain preferred variants, the first reduction resonant frequency and/or the second reduction resonant frequency has a value from 25 Hz to 150 Hz, preferably from 30 Hz to 120 Hz, more preferably from 55 Hz to 115 Hz. These frequency values have proven to be suitable for a wide range of applications and wheel units, respectively, in particular, in the context of where units of typical rail vehicle applications.

It will be appreciated that, for certain applications, torsional vibration reduction at specific frequencies (i.e. mono frequency vibration reduction) or within comparatively narrow frequency bands (i.e. narrow frequency band vibration reduction) may be sufficient. Preferably, however, with certain preferred variants certain detuning of the frequency of the counter-phase oscillation in order to broaden the frequency band in which the respective torsional vibration reduction mass unit provides noticeable and sufficient torsional vibration reduction.

Such detuning can be obtained by any suitable means which provides broadening of the frequency band wherein the torsional vibration reduction mass executes counter-phase oscillation of sufficiently large amplitude to provide corresponding torsional vibration reduction. Preferably, such detuning is obtained via a corresponding damping of the counter-phase oscillation of the respective torsional vibration reduction mass. Hence, with certain preferred variants, the first torsional vibration reduction mass and/or the second torsional vibration reduction mass is coupled to the wheel unit via a damping link providing damping of the counter-phase oscillation.

Such damping can be obtained by any suitable means, e.g. any suitable damping elements connecting the wheel unit and the respective torsional vibration reduction mass. With preferred variants of very simple configuration, the damping link includes a frictional contact between the torsional vibration reduction mass and the wheel unit. In addition or as an alternative, the damping link may include a contact surface pairing defining a frictional damping characteristic of the damping link.

It will be appreciated that, in both cases, it is possible to properly adjust the damping effect in a very simple manner. Hence, the bandwidth of the counter-phase oscillation frequency band, over which torsional vibration reduction is achieved, may be adjusted in a very simple manner. This may be done via the parameters of the frictional contact surfaces and/or the contact force or pressure, respectively, acting between these frictional contact surfaces. Hence, fine-tuning of the counter-phase oscillation frequency band is available by fairly simple means. Hence, with preferred variants, the damping link is configured to adjust a counter-phase oscillation frequency band, in particular, to adjust a width of the counter-phase oscillation frequency band.

It will be appreciated that the amount of torsional vibration reduction to be achieved within the counter-phase oscillation frequency band may vary as a function of the amplitude of the torsional vibration on the wheel unit. Preferably, the counter-phase oscillation, in the counter-phase oscillation frequency band, provides reduction of the torsional vibration of the wheel unit by at least 40%, preferably at least 50%, more preferably at least 70%, compared to a reference state, where the torsional vibration reduction mass is missing or is torsionally rigidly coupled to the wheel unit. In these cases a particularly favorable reduction of torsional vibration may be achieved.

With further preferred variants, the at least one wheel has an unworn state with a first wheel unit resonant frequency and a fully worn state with a second wheel unit resonant frequency, the fully worn state requiring exchange of the at least one wheel. The first wheel unit resonant frequency and the second wheel unit resonant frequency further define a wheel unit lifetime resonant frequency gap, and the width of the counter-phase oscillation frequency band is at least 10%, preferably at least 15%, more preferably 10% to 65%, of the wheel unit lifetime resonant frequency gap.

It will be appreciated that, in the sense of the present invention, the respective reduction resonant frequency typically is the frequency within such a counter-phase oscillation frequency band where the counter-phase oscillation has its maximum amplitude.

It will be appreciated that the frictional contact providing the damping link functionality may be formed directly between the torsional vibration reduction mass and a component of the wheel unit itself. With certain variants, however, the damping link may comprise at least one intermediate element which is located between the torsional vibration reduction mass and an associated component of the wheel unit and has at least one contact surface defining a frictional damping characteristic of the damping link. The use of such an intermediate element may greatly facilitate adjustment of the frictional damping characteristic and, consequently, of the bandwidth of the counter-phase oscillation frequency band.

It will be appreciated that a separate component may be used for the respective torsional vibration reduction mass, which has exclusively the function of providing torsional vibration reduction. With preferred variants, however, one or more components of the running gear unit are used as a torsional vibration reduction mass, which have one or more further functions beyond the torsional vibration reduction. Such functional integration apparently is advantageous in terms of reducing the weight and the expense for the running gear unit.

As mentioned above, with certain preferred variants, the first torsional vibration reduction mass and/or the second torsional vibration reduction mass is a brake disc of a brake unit of the wheel unit.

It will be appreciated in this context that, in many a rail vehicle applications with an electric drive system providing electric (or regenerative) braking as the main type or preferred type of service brake, such brake discs are fairly rarely used during operation of the vehicle, namely only in emergency braking situations. Hence, such brake discs are fairly well-suited for providing torsional vibration reduction under most operating conditions of the vehicle, in particular under all braking situations where no use is made of the mechanical brakes.

It will be further appreciated that the respective torsional vibration reduction mass may be connected to any desired part of the wheel unit. With certain preferred variants requiring only very few modifications in the overall design of the wheel unit, the first torsional vibration reduction mass and/or the second torsional vibration reduction mass is coupled to the wheel of the wheel unit, in particular, to a web element of the wheel. With certain variants such a torsional vibration reduction mass may also be connected to the wheel unit shaft, in particular, at a location remote from the wheel.

With further variants, the torsional vibration reduction mass is a first torsional vibration reduction mass which is coupled to a first side of the wheel and a second torsional vibration reduction mass is coupled to a second side of the wheel, in particular, to a web element of the wheel. In this case as well, very little modification to the design of the wheel (compared, for example, to conventional designs with wheel mounted brake discs) is necessary.

Both these cases have the two torsional vibration reduction masses mounted to one wheel on the wheel unit. Such a configuration is, for example, beneficial for wheel units with a single wheel (executing torsional vibration with respect to a rotating mass of the connected drive, such as e.g. the rotor of a drive motor driving the wheel). Nevertheless, such a configuration is also beneficial in configurations where the wheel unit comprises two mechanically coupled wheels (such as e.g. a wheel set). In particular, in the latter case, it may be sufficient to provide such a pair of first and second torsional vibration reduction masses only at one of the two wheels of the wheel unit.

With other preferred variants, a first torsional vibration reduction mass is coupled to a first wheel of the wheel unit and a second torsional vibration reduction mass is coupled to a second wheel of the wheel unit. It will be appreciated that, in these cases, either one of the first and second torsional vibration reduction mass may in itself be formed by the two rigidly connected brake discs provided for the respective wheel as they are known, for example, from EP 1 551 646 B1 (Bieker et al).

With other preferred variants, the first torsional vibration reduction mass and the second torsional vibration reduction mass are coupled to a first wheel of the wheel unit while a third torsional vibration reduction mass and a fourth torsional vibration reduction mass are coupled to a second wheel of the wheel unit. Here, some or even all of the reduction resonant frequencies of the torsional vibration reduction mass is maybe mutually offset as it has been outlined above. Hence, up to four different reduction resonant frequencies may be implemented in such a case providing a very broadband vibration reduction.

Furthermore, with certain preferred variants, the first torsional vibration reduction mass and/or the second torsional vibration reduction mass is coupled to the wheel unit shaft, in particular, at a location remote from the wheel. This variant is particularly beneficial, for example, for wheel unit designs where building space restrictions or other reasons do not allow mounting the torsional vibration reduction mass to the wheel itself.

It will be appreciated that arbitrary combinations of the options for mounting the torsional vibration reduction masses as outlined above may be implemented as well.

It will be further appreciated that the torsional compliance connection between the respective torsional vibration reduction mass and the wheel unit may be implemented in any desired and suitable way allowing appropriate counter-phase oscillation of the torsional vibration reduction mass.

Finally, according to a further aspect, the present invention further relates to a method of reducing torsional vibration in a running gear unit, in particular for a rail vehicle. The running gear unit comprises a wheel unit and a torsional vibration reduction mass unit. The wheel unit comprises a wheel unit shaft and at least one wheel, the wheel unit shaft defining an axis of rotation, the axis of rotation defining an axial direction and a radial direction of the wheel unit as well as a circumferential direction about the axis of rotation. The wheel is coupled to the wheel unit shaft in a manner torsionally rigid about the axis of rotation and is configured to run on a track. The method comprises coupling a torsional vibration reduction mass to the wheel unit in a manner torsionally compliant about the axis of rotation via at least one torsional linking arrangement compliant in the circumferential direction, in particular, via a plurality of such torsional linking arrangements distributed along the circumferential direction, thereby defining a reduction resonant frequency of the counter-phase oscillation of the torsional vibration reduction mass. The method further comprises allowing the torsional vibration reduction mass to oscillate about the axis of rotation in counter-phase with respect to a component of the wheel unit, in particular, with respect to the wheel, to reduce torsional vibration of the wheel unit. Herein, a first support element of the torsional linking arrangement is connected to one of the wheel unit and the torsional vibration reduction mass in a manner rigid in the circumferential direction. A second support element of the torsional linking arrangement is connected to the other one of the wheel unit and the torsional vibration reduction mass in a manner rigid in the circumferential direction. At least one spring element of the torsional linking arrangement acts kinematically in series between the first support element and the second support element to provide the compliance of the linking arrangement at least in a first torsional direction along the circumferential direction. An elongated spring section of the at least one spring element, the spring section being elongated along the axial direction, provides the compliance of the linking arrangement at least in the first torsional direction along the circumferential direction by a bending compliance about a bending axis which is at least substantially parallel to a plane defined by the radial direction and the circumferential direction.

With this method, the variants and advantages of the invention as they have been outlined above in the context of the running gear unit according to the invention may be realized to the same extent, such that insofar reference is made to the explanations given above.

Further preferred embodiments of the invention become apparent from the dependent claims or the following description of preferred embodiments which refers to the attached drawings.

BRIEF DESCRIPTION OF THE DRAWINGS

Figure 1    is a schematic side view of a rail vehicle with a preferred embodiment of a running gear unit according to the invention.

Figure 2    is a schematic sectional view of the running gear unit of the vehicle from Figure 1.

Figure 3    is a first schematic sectional view of a part of the running gear unit from Figure 2 (detail III from Figure 2).

Figure 4    is a second schematic sectional view of a part of the running gear unit from Figure 2, not forming part of the invention.

Figure 5    is a schematic perspective view of a component of the running gear unit from Figure 2.

Figure 6    is a schematic perspective view of a part of the component from Figure 5.

Figure 7    is a schematic sectional view of the component from Figure 5 (along line VII-VII of Figure 5).

Figure 8    is a diagram illustrating the torsional vibration behavior of a reference running gear unit for the running gear unit from Figure 2.

Figure 9    is a diagram illustrating the torsional vibration behavior of the running gear unit from Figure 2.

DETAILED DESCRIPTION OF THE INVENTION

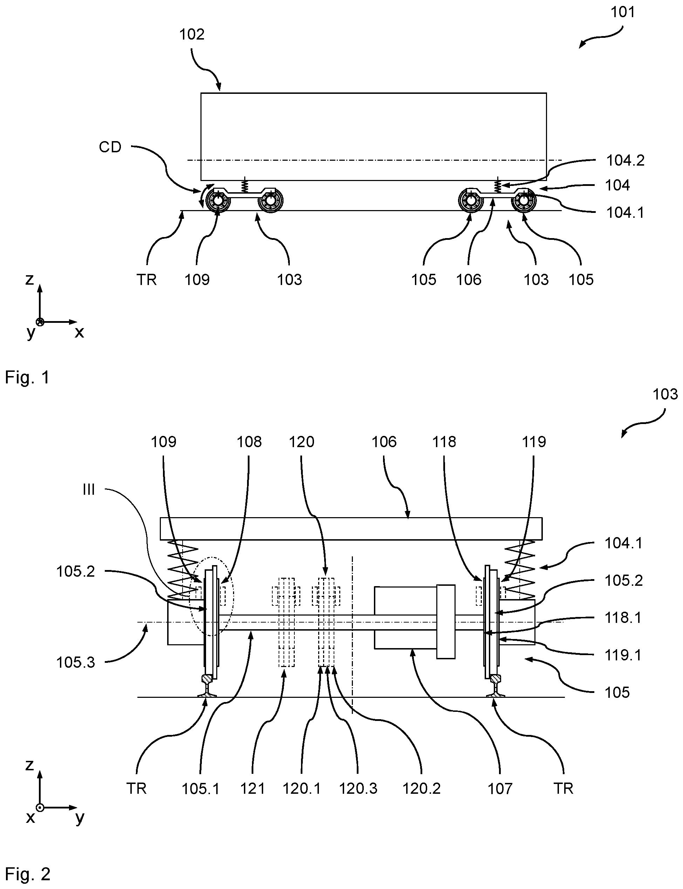

In the following, with reference to Figures 1 to 9, a preferred embodiment of a running gear unit according to the invention will be described by means of a running gear according to the invention for a rail vehicle 101. The vehicle 101 may be a vehicle of a train set and, hence, may be coupled to one or more further vehicles (not shown) of the train set. Moreover, all or some of the vehicles of the train set may implement the present invention as described herein.

Figure 1 shows a schematic side view of the vehicle 101. The vehicle 101 comprises a wagon body 102, which in the area of its first end is supported on a running gear in the form of a first bogie 103 by means of a first spring device 104. In the area of its second end, the wagon body 102 is supported by means of a second spring device 104 on a second running gear in the form of a second bogie 103. The bogies 103 are of identical design. Similar applies to the spring devices 104. It is self-evident, however, that the present invention can also be used with other configurations in which other running gear designs are employed.

For ease of understanding of the explanations that follow, a coordinate system x, y, z (determined by the wheel contact plane of the bogies 104) is indicated in the figures, in which the x coordinate denotes the longitudinal direction of the rail vehicle 101, the y coordinate denotes the transverse direction of the rail vehicle 101 and the z coordinate denotes the height direction of the rail vehicle 101.

The bogie 104 comprises two running gear units according to the invention in the form of wheel sets 105, each of which supports a bogie frame 106 via the primary suspension 104.1 of the spring device 104. The wagon body 102 is supported on the bogie frame 106 via a secondary suspension 104.2. The primary suspension 104.1 and the secondary suspension 104.2 are shown in simplified form in Figure 1 as helical springs. It is self-evident, however, that the primary suspension 104.1 or the secondary suspension 104.2 can be any suitable spring device. In particular, the secondary suspension 104.2 preferably is a sufficiently well-known pneumatic suspension or similar.

In the present example, the bogie 104 is configured as a traction unit with its wheel sets 105 connected to a conventional drive unit 107 driving the wheel set 105. The drive unit 107 comprises a motor connected to a gearbox, which transmits the motor torque MT in a conventional manner to the wheel set shaft 105.1 of the wheel set 105. The wheels 105.2 of the wheel set 105 are mounted to the wheel set shaft 105.1 in a torsionally rigid manner by a press fit connection, such that the traction torque MT is transmitted to the rails TR of the track T resulting in the form of a traction force FT acting at the wheel to rail contact point.

The wheel set shaft 105.1 defines an axis of rotation 105.3, which defines an axial direction AD and a radial direction RD of the wheel set 105 as well as a torsional direction TD or circumferential direction CD, respectively, about the axis of rotation 105.3. As has been explained above and will be explained in greater detail below, when accelerating the vehicle 101, the wheel set 105 may, in principle, be subject to undesired torsional vibration about the axis of rotation 105.3 which is counteracted with the present invention.

It will be appreciated that the above not only applies to a situation where the vehicle is (positively) accelerated by the drive unit 107. It also applies under moment transmission conditions where the vehicle is decelerated (or negatively accelerated, respectively) by the drive unit 107, e.g. during so called electric braking of the vehicle.

It will be further appreciated, however, that with other variants, at least one of the wheel sets 105 may also be a non-driven wheel set. Here, such torsional vibration may develop, in particular, when braking occurs via shaft mounted brake discs.

Transfer of the traction forces FT from the wheels 105.2 to the rails TR requires a relative speed between the wheel 105.2 and the rails TR. In other words, the tangential speed U of the wheel 105.2 at the wheel to rail contact point must be greater than the translational speed V of the wheel 105.2. This relative speed between the wheel 105.2 and the rail TR is called slip speed (or, in some cases hereinafter, simply slip) S = U - V.

The effective traction force FT at the wheel to rail contact point calculates as the product of the contact force FC and the adhesion factor AF at the wheel to rail contact point, i.e. as:

$$FT = AF \cdot FC . \tag{1}$$

The characteristic relation between the slip S and the adhesion factor AF, hence, the effective traction force FT, the so called adhesion characteristic AC, is generally known. Typically, in a first operating area OA1 at very low slip speeds S, has a steep gradient in the adhesion characteristic AC, flattening out in a second operating area OA2 at a certain level depending on the adhesion level available between the wheel 105.2 and the rail TR. The adhesion level is defined by the contact conditions between the wheel 105.2 and the rail TR, such as dry contact conditions, wet contact conditions, water or leaves on the track T, etc. Generally, in a third operating area OA3 at higher slip levels, the adhesion drops down with a negative gradient following a logarithmic shape.

The shaft 105.1 connecting the wheels 105.2 basically forms a torsional spring between the two wheels 105.2 with a very low damping ratio. There are a number of different coupling arrangements possible, some where the coupling between the motor and the shaft 105.1 is of a hollow shaft type connected to one of the wheels, or so called axle hug or semi suspended drives, where the gearbox is located just beside one wheel 105.2. In special cases, the coupling is allocated just in the middle of the shaft 105.1 through a hollow shaft design. Coupling and gearbox act as a spring and damping system as well, so that the drivetrain is basically a three mass/spring system with all its dynamic characteristics.

The mechanical system of the wheel set 105 has a very low damping ratio and is therefore easily excited and brought into torsional oscillation, a so called torsional vibration TV. The wheels 105.2 are then oscillating against each other about the axis of rotation 105.3 of the wheel set 105 with a frequency between around 40 Hz to 120 Hz, depending on the rigidities, the dimensions and the masses of the components of the wheel set 105, in particular, of the wheels 105.2 and the shaft 105.1. These rigidities, dimensions and masses define one or more torsional vibration resonant frequencies TVRF of the wheel set 105.

Apparently, during operation of the rail vehicle 101, the dimensions and masses of the components of the wheel set 105 undergo wear related changes. In particular, the rail contact surfaces of the wheels 105.2 wear down to a considerable amount, thereby reducing both the mass and the diameter of the wheel. This causes a modification of the torsional vibration resonant frequencies TVRF of the wheel set 105 over its lifetime as will be explained in greater detail below.

As the wheels 105.2 are exposed to the different adhesion characteristics, this oscillation behaves different, depending on the operating point OP on the respective adhesion characteristic. In the operating area OA1, the gradient is positive, i.e. the slip energy acts as a damper and no torsional oscillation of the wheels 105.2 is possible.

In the operating area OA2, the gradient is substantially zero. At this point, a torsional oscillation is not yet starting, but such an operating point with maximum adhesion is difficult to maintain with the traction control system. The shaft 105.1 tends to slip out into the operating area OA3 with its negative gradient. Such a negative gradient of the adhesion characteristic acts as damper with a negative characteristic, which is equal to an active excitation of any oscillation of the mechanical system.

While traversing the operating area OA2 on the adhesion characteristic, the adhesion force changes, and, with an asymmetric mechanical system as shown in Figure 2, an initiation of the torsional oscillation TV is given by the nature of the system. The torsional oscillation or torsional vibration TV of the wheels 105.2 then starts and propagates.

Typically, there is an exponential growth (over time t) of the amplitude MTVA of the oscillating torque MTV acting within the shaft 105.1 as a result of the torsional vibration TV. The exponential growth of the amplitude MTVA depends on the inertia of the wheels 105.2 and the motor 107.1 and the stiffness of the shaft 105.1, as well as of the type of arrangement, in particular, at which position on the shaft 105.1 the torque of the motor is introduced.

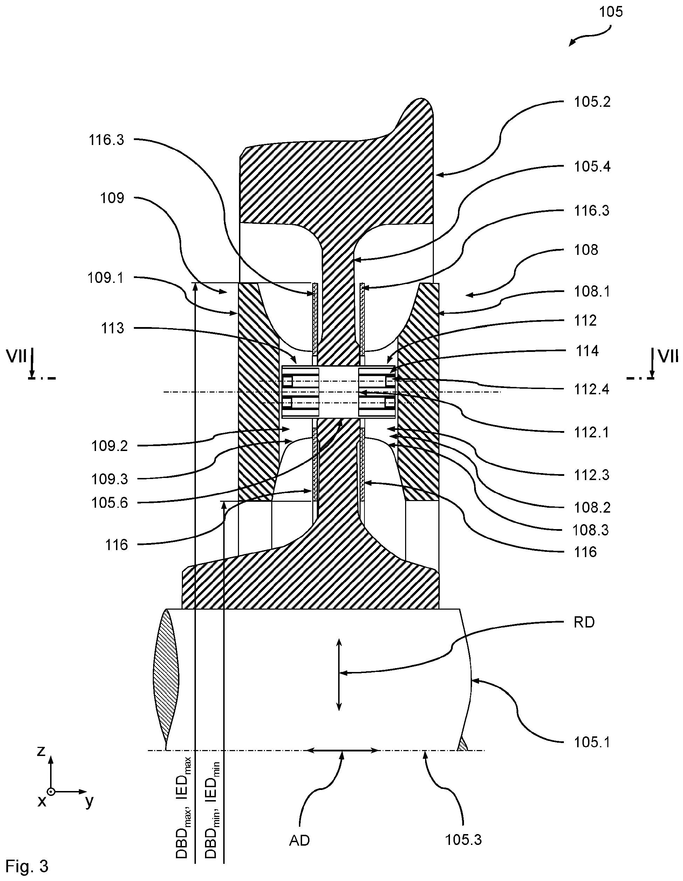

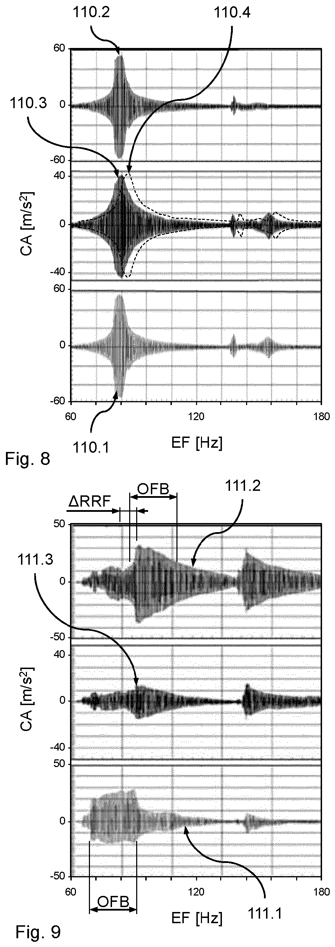

As can be seen, in particular, from Figure 3, to passively counteract this torsional vibration TV, a first torsional vibration reduction mass unit 108, and a second torsional vibration reduction mass unit 109 are provided, the operation of which will be explained in greater detail below, in particular with reference to Figure 8 and 9.

The first torsional vibration reduction mass unit 108 comprises a first torsional vibration reduction mass in the form of a first brake disc 108.1 coupled to the wheel set 105, more precisely to the wheel 105.2, in a torsionally compliant manner about the axis of rotation 105.3. Similarly, the second torsional vibration reduction mass unit 109 comprises a second torsional vibration reduction mass in the form of a second brake disc 109.1 also coupled to the wheel set 105, more precisely to the wheel 105.2 in a torsionally compliant manner about the axis of rotation.

In the present example, the torsionally compliant connection allowing the counter-phase oscillation between the respective brake disc 108.1 and 109.1 and the wheel 105.2 each is achieved via a plurality of eight torsional linking arrangements 112 and 113, respectively, evenly distributed along the circumferential direction CD of the respective brake disc 108.1 and 109.1 (see, in particular, Figure 1). It will be appreciated, however, that with other variants, any other desired number of such torsional linking arrangements 112, 113 may be selected, in particular, as a function of the torsional compliance to be achieved.

In the present example, the first torsional linking arrangements 112 (for the first brake disc 108.1) and the second torsional linking arrangements 113 (for the second brake disc 109.1) are largely identical and partly formed by common components, such that their functionality will be described mainly by way of example of one of the first linking arrangements 112 and only the differences will be referred to in greater detail.

The respective torsional linking arrangement 112 is compliant in the circumferential direction CD, and, in the present example, is a modified conventional sliding block arrangement. Such conventional sliding block arrangements are typically provided to allow mutual (braking heat induced) thermal expansion between the brake disc 108.1, 109.1 and the wheel 105.2 during operation.

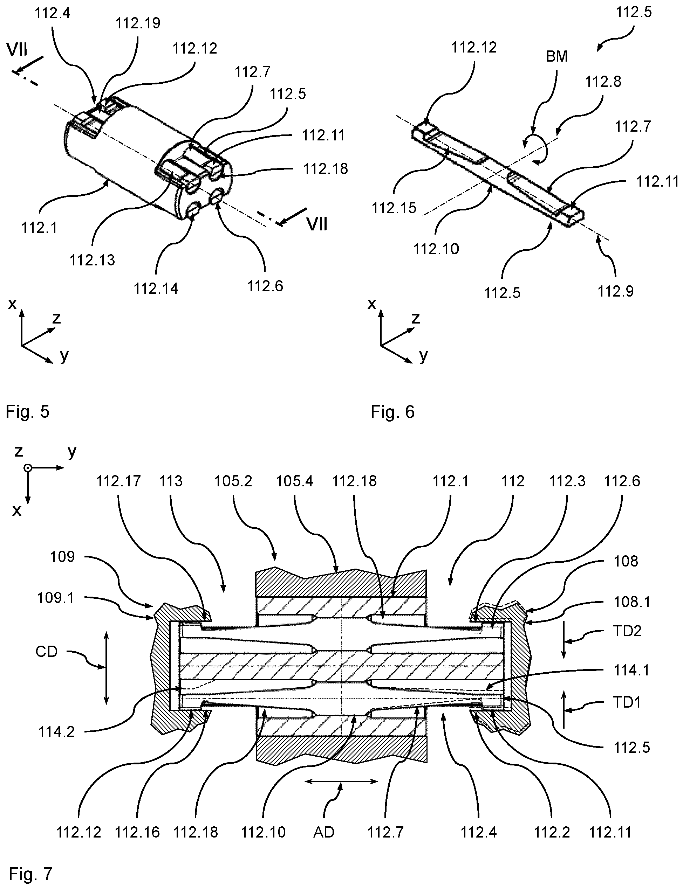

As can be seen particularly well from Figure 7, the torsional linking arrangement 112, in the present example, comprises a first support element in the form of a sliding block element 112.1, a second support element comprising a first shoulder element 112.2 and a second shoulder element 112.3, and a spring unit 112.4 with a first spring element 112.5 and a second spring element 112.6.

The sliding block element 112.1 is connected to the wheel 105.2, more precisely to its web section 105.4, in that it is inserted ( typically with a press fit) into a bore 105.6 within the web section 105.4, to provide a connection that is substantially rigid in the circumferential direction CD.

As can be seen best from Figure 3 and 5, the first shoulder element 112.2 and the second shoulder element 112.3 are formed by a radial recess 108.2 (forming two substantially parallel shoulder surfaces) within an axial protrusion 108.3 of the first brake disc 108.1, which forms the second support element and receives the sliding block element 112.1 together with the spring elements 112.5 and 112.6, such that a substantially rigid support in both directions of rotation along the circumferential direction CD is formed within the first brake disc 108.1.

In the present example, the axial protrusion 108.3 is a generally ring shaped protrusion of the brake disc 108.1, which is only interrupted by the (eight) recesses 108.2 along its circumference. It will be appreciated, however, that with other variants, a configuration with a plurality of rib-like protrusions may be provided. In this case, the recess 108.2 forming the shoulder surfaces of the shoulder elements 112.2 and 112.3 is then located between two of these protrusions 108.4 (each forming one of the shoulder elements 112.2 and 112.3).

The first spring element 112.5 is arranged and acts kinematically in series between the first support element 112.1 and the second support element 112.2 to provide the compliance of the linking arrangement 112 in a first torsional direction TD1 along the circumferential direction CD. The spring element 112.2 comprises an elongated first spring section 112.7 which is elongated along the axial direction AD. The first spring section 112.7 is arranged and configured to provide the compliance of the linking arrangement 112 in the first torsional direction TD1 along the circumferential direction CD by a bending compliance about a bending axis 112.8 (see Figure 6) which is at least substantially parallel to a plane defined by the radial direction RD and the circumferential direction CD.

It will be appreciated that the spring section 112.7, in principle, may have any desired elongated shape which allows achieving the bending deformation with the desired bending compliance to obtain the desired overall reduction resonant frequency RRF of the counter-phase oscillation of the torsional vibration reduction mass 108.1. In the present example, a particularly simple configuration is achieved in that the first spring section 112.7 is a rod shaped or plate shaped element formed by a leaf spring element.

The spring section 112.7 may have any desired and suitable shape and dimensions along the axial direction AD. In particular, the shape and/or dimensions of the first spring section 112.7 may be at least section-wise uniform along the axial direction AD. With certain variants, as with the present example, the first spring section 112.7 tapers between the first support element 112.1 and the second support element 112.2, thereby achieving a particularly beneficial deformation behavior of the spring element 112.5 with a desirably low variation of the stresses within the spring element along the axial direction AD.

More precisely, as with the present example, the first spring section 112.7 may taper from the first support element 112.1 towards the second support element 112.2. It will be appreciated that the tapering along the axial direction AD may be provided by reducing the dimensions of the spring section in any desired and suitable direction transverse to the axial direction AD. With certain particularly simple yet efficient configurations, as with the present example, the first spring section 112.7 tapers by at least decreasing its dimension or thickness in the circumferential direction CD.

The introduction of the bending moment BM into the spring element 112.5 can, in principle, be achieved in any desired and suitable way. For example, in a solution geometrically similar to the present example, the first support element 112.1 might be formed monolithic with the spring element 112.5. With the present example, a simple to manufacture variant is achieved in that the spring section 112.7 is elongated along a longitudinal axis 112.9 of the spring element 112.5 and the spring element 112.5 is configured to contact the first support element 112.1 via a first contact element 112.10 and the second support element 112.2 via a second contact element 112.11. Such contact can be made in any desired and suitable way. With the present variant, the respective contact element 112.10, 112.11 protrudes from the spring section 112.7 in a direction transverse to the longitudinal axis 112.9 of the spring element 112.5. More precisely, in the present example, the element 112.10, 112.11 protrudes from the first spring section 112.7 along the torsional direction TD1 or circumferential direction CD, respectively.

In the present example, along the longitudinal axis 112.9 of the spring element 112.5, the first contact element 112.10 is located at a central section of the spring element, while the second contact element 112.11 is located at a first free end of the spring element 112.5. By this means, a very simple configuration is achieved, where the spring element 112.5 contacts the wheel unit 105 via the first contact element 112.10, the first torsional vibration reduction mass 108.1 via the second contact element 112.11 and the second torsional vibration reduction mass 109.1 via a third contact element 112.12 located at the opposite second free end of the spring element 112.5 (as will be explained in greater detail further below).

It will be appreciated that the respective contact element 112.10, 112.11, 112.12 may be an element which is separate from the spring element 112.5 and may be connected to the spring element 112.5 in any desired and suitable way, for example, using (alone or in any desired combination) a frictional, a positive or an adhesive connection. With the present variant, the respective contact element 112.10, 112.11, 112.12 is monolithically integrated into the spring element 112.5, thereby yielding a very compact and stable connection.

It will be appreciated that, in principle, the spring element 112.5 may be the only spring element of the respective spring unit 112 to achieve the torsionally compliant coupling. With preferred variants, there may be more than one spring element 112.5 per spring unit 112.4. In principle, any desired number of spring elements 112.5, 112.6 per spring unit 112.4 may be used. Preferably there are at least two spring elements 112.5, 112.6 per spring unit, typically two to six spring elements 112.5, 112.6, for example, four spring elements 112.5, 112.6 as is the case with the present variant.

As with the present example, preferably, at least two of the spring elements 112.5, 112.6 act in opposite torsional directions TD1 and TD2 (along the circumferential direction CD). This has the advantage that the respective spring element 112.5, 112.6 may not be subject to alternating bending stresses per load cycle. This may reduce the risk of spring failure.

In the present example, the first spring element 112.5 provides the compliance of the linking arrangement 112 in the first torsional direction TD1 and the second spring element 112.6 is arranged and acts kinematically in series between the first support element 112.1 and the second shoulder element 112.3 of the second support element 108.3 to provide the compliance of the linking arrangement 112 in a second torsional direction TD2 along the circumferential direction CD and opposite to the first torsional direction TD1.

It will be appreciated that the second spring element 112.6 may have a different configuration than the first spring element 112.5. Preferably, however, the second spring element 112.6 (and any further spring element) may be configured in a manner at least substantially identical to the first spring element 112.5. By this means particularly simple configurations may be achieved showing easily scalable properties.

EP 4 371 846 B1

It will be appreciated that, in a neutral state of the running gear unit 103 or the linking arrangement 112, respectively, (e.g., an unloaded state, where the torsional vibration reduction mass 108.1 and the wheel unit 105 are not deflected with respect to each other in the circumferential direction CD), the respective spring element 112.5, 112.6 may be in an unloaded and relaxed state. In this case, onset of the bending and the resulting spring force may be immediate with any torsional deflection from that neutral state or it may be delayed by a defined amount (e.g., due to a defined circumferential play between the respective spring element 112.5, 112.6 and the second support element 108.3). With certain variants, however, the first spring element 112.5 and the second spring element 112.6 are under a certain bending pre-stress about their respective bending axis 112.8 in a neutral state of the linking arrangement 112. This has the advantage of ensuring a play-free configuration with an immediate onset of the spring force.

In the present example, the spring unit 112.4 comprises a third spring element 112.13 which is arranged and acts kinematically in parallel to the first spring element 112.5 between the first support element 112.1 and the second support element 108.3 to provide the compliance of the linking arrangement 112 in the first torsional direction TD1. Here as well, the third spring element 112.13 may have a different configuration than the first and/or second spring element 112.5, 112.6. Again, preferably, the third spring element 112.13 may be configured in a manner substantially identical to the first spring element 112.5, as is the case in the present example.

Furthermore, in the present example, the spring unit 112.4 comprises a fourth spring element 112.14 which is arranged and acts kinematically in parallel to the second spring element 112.6 between the first support element 112.1 and the second support element 108.3 to provide the compliance of the linking arrangement 112 in the second torsional direction TD2. Here as well, the fourth spring element 112.14 may have a different configuration than the first and/or second and/or third spring element 112.5, 112.6, 112.13. Again, preferably, the fourth spring element 112.14 may be configured in a manner substantially identical to the second spring element 112.6, as is the case in the present example.

It will be appreciated that, depending on the use case of the running gear unit 103, in principle, one torsional vibration reduction mass 108.1 may be sufficient to achieve satisfactory torsional vibration reduction. With preferred variants such as the present example, however, one or more further torsional vibration reduction masses 109.1 may be used with the respective wheel unit 105. Hence, as is the case with the present example, the second torsional vibration reduction mass 109.1 is coupled to the wheel unit 105 in a manner torsionally compliant about the axis of rotation and configured to oscillate about the axis of rotation in counter-phase with respect to the wheel unit 105 to reduce torsional vibration of the wheel unit 105.

It will be appreciated that such a further, second torsional vibration reduction mass 109.1 may be coupled to the wheel unit 105 via at least one or more further torsional linking arrangements 113, e.g., in the same manner and configuration as the first torsional vibration reduction mass 108.1, in particular, with one or more further linking arrangements 113 that are at least essentially identical to the one or more linking arrangements 112 for the first torsional vibration reduction mass 108.1. Preferably, as is the case with the present example, the further, second torsional vibration reduction mass 109.1 is coupled to the wheel unit 105 via the torsional linking arrangement(s) 112. More precisely, as with the present example, the respective first linking arrangement 112 also integrates or forms, respectively, the further, second linking arrangement 113. By this means, a very compact and efficient torsional vibration reduction configuration may be achieved.

As can be seen best from Figure 3 and 5, similar to the first brake disc 108.1, a third shoulder element 112.16 and a fourth second shoulder element 112.17 are formed by a radial recess 109.2 (forming two substantially parallel shoulder surfaces) within an axial protrusion 109.3 of the second brake disc 109.1, which forms a third support element and receives the sliding block element 112.1 together with the respective end section of spring elements 112.5, 112.6, 112.13, 112.14, such that a substantially rigid support in both directions of rotation along the circumferential direction CD is formed within the second brake disc 109.1.

The respective spring element 112.5, 112.6, 112.13, 112.14 is thus arranged and acts kinematically in series between the third support element 109.3 and the first support element 112.1 to provide compliance of the linking arrangement 112 (113) between the wheel unit 105 and the second torsional vibration reduction mass 109.1 in the first and second torsional direction TD1 and TD2, respectively, along the circumferential direction CD. By this means, a highly compact configuration is achieved which uses a low, possibly minimum number of different parts. As with the present example, the spring unit(s) 112.4 and/or the linking arrangement(s) 112 (113) and/or the pair of torsional vibration reduction masses 108.1, 109,1 may be respectively configured to be at least substantially symmetric with respect to the part 105.4 of the wheel unit 105 with the first support section 112.1.

As can be seen from the first spring element 112.5 shown in Figure 6, the first spring element 112.5 comprises the first spring section 112.7 and a second spring section 112.15 which is configured and used to provide torsionally compliant linking of the second torsional vibration reduction mass 109.1 to the wheel unit 105. In principle, the second spring section 112.15 may function in the same way as or in a different way than the first spring section 112.7. Preferably, as is the case with the present example, the second spring section 112.15 is configured to provide the compliance of the linking arrangement 112 (113) between the wheel unit 105 and the second torsional vibration reduction mass 109.1 also by a bending compliance about the bending axis 112.8 (which is at least substantially parallel to a plane defined by the radial direction RD and the circumferential direction CD).

As previously noted, as is the case with the present example, the second spring section 112.15 may at least essentially be configured in the same way as the first spring section 112.7. Hence, in the present case, the second spring section 112.15 tapers along the longitudinal axis 112.9 of the spring element 112.5, thereby achieving the same configurations and effects of such tapering as they have been described above for the first spring section 112.7.

As can be further seen from Figure 7, the spring element 112.5 is configured to contact the third support element 109.3 via the third contact element 112.12. This is done in a similar or at least essentially the same manner as has been described above for the second contact element 112.11, such that reference is made to the above.

It will be appreciated that the respective spring element 112.5, 112.6, 112.13, 112.14 may be connected to the first support element 112.1 in any desired and suitable way. For example, the respective spring element 112.5, 112.6, 112.13, 112.14 may be connected to an outer surface of the first support element. As noted above, with the present example, an overall highly compact and space-saving arrangement is achieved in that the respective spring element 112.5, 112.6, 112.13, 112.14 is at least partially received within a respective recess 112.18 of the first support element 112.1.

The recess 112.18 may be configured to receive at least part of the respective spring section 112.7, 112.15 with sufficient play at least in the circumferential direction CD such that the spring section 112.7, 112.15 can freely bend (see dashed contour 114.1 in Figure 7) to provide the bending compliance about the bending axis 112.8. The recess 112.18 may have any desired and suitable shape. Particularly simple and beneficial variants have a configuration where the recess 112.18 is one of an elongated bore and an elongated slot of the first support element 112.1.

With certain very compact and highly functionally integrated variants, the recess 112.18 and/or the first support element 112.1 may be formed to provide a hard stop section 114.2 (see e.g., dashed contour in Figure 7) and/or a hard stop section 112.19 (per torsional direction TD1, TD2 and per torsional vibration reduction mass 108.1, 109.1) configured to limit bending of the respective spring element 112.5, 112.6, 112.13, 112.14 about the bending axis 112.8 during normal operation of the running gear unit. This may be particularly useful as it may ensure, in a very simple manner, that in certain cases (e.g., where the torsional vibration reduction mass 108.1, 109.1 is a brake disc as with the present example) higher torsional moments (above a certain threshold) can be safely transmitted between the torsional vibration reduction mass 108.1, 109.1 and the wheel unit 105 without overloading the respective spring element 112.5, 112.6, 112.13, 112.14.

It will be appreciated that, with certain variants, however, the bending rigidity of the respective spring element 112.5, 112.6, 112.13, 112.14 may be selected such that a maximum torsional moment $MT_{max}$ (e.g., a maximum braking torque) to be transmitted about the rotational axis 105.3 between the torsional vibration reduction mass 108.1, 109.1 and the wheel unit 105 during normal operation of the running gear unit 103 is taken exclusively by elastic deformation of the respective spring element 112.5, 112.6, 112.13, 112.14 of the respective torsional linking arrangement(s) 112 (113). Hence, in other words, during normal operation, relative motion about the rotational axis 105.3 between the torsional vibration reduction mass 108.1, 109.1 and the wheel unit 105 is limited exclusively by the elastic deformation of the respective spring element 112.5, 112.6, 112.13, 112.14 of the torsional linking arrangement 112 (113). Consequently, the hard stop section 114.2, 112.19 has not to become effective in these normal operation cases.

It will be appreciated that, in principle, via a corresponding configuration of the spring elements 112.5, 112.6, 112.13, 112.14, any desired and suitable torsional deflection behavior between the torsional vibration reduction mass 108.1, 109.1 and the wheel unit 105 during normal operation may be achieved. With certain variants, a rigidity of the spring elements 112.5, 112.6, 112.13, 112.14 may be selected such that a maximum torsional moment $MT_{max}$ to be transmitted about the rotational axis 105.3 between the torsional vibration reduction mass 108.1, 109.1 and the wheel unit 105 during normal operation of the running gear unit causes a maximum deflection of the at least one spring element, in particular, in the respective torsional direction TD1, TD2, by less than 1.0 mm, preferably less than 0.5 mm, more preferably 0.4 mm to 0.1 mm.

It will be appreciated that, as with the present example, the torsional linking arrangements 112 (113) preferably are configured to allow thermally induced expansion in the radial direction RD between the torsional vibration reduction mass 108.1, 109.1 and the wheel unit 105. In the present example, this is achieved by making the dimensions and general geometry of the sliding block element 112.1 essentially similar to a conventional sliding block element. This is not only beneficial in that it avoids stresses introduced into the arrangement upon thermal expansion of the components during operation. This design essentially allows retrofitting existing wheel units 105 in with sliding block elements 112.1 instead of their conventional sliding block elements.

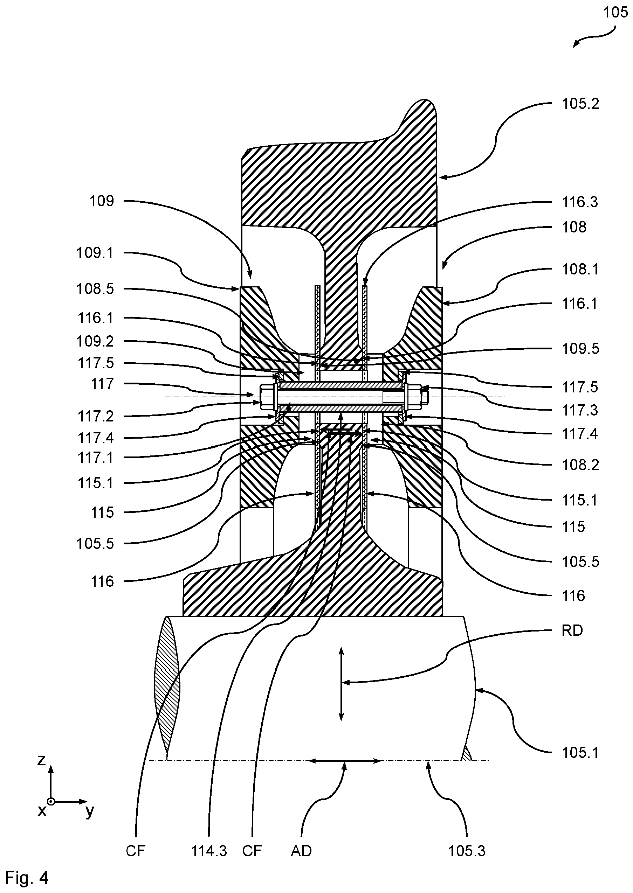

As can be seen from Figure 4, in the present example, the first brake disc 108.1 and the second brake disc 109.1 (at locations offset in the circumferential direction CD with respect to the sliding block elements 112.1) are mutually rigidly coupled to each other in a similar manner, as it is known, for example, from EP 1 551 646 B1 (Bieker et al.), to form a combined first torsional vibration reduction mass unit pair 108, 109. The combined first torsional vibration reduction mass pair (formed by the brake discs 108.1, 109.1) is coupled in the torsionally compliant manner to the first wheel 105.2 via damping links 115 to exhibit the counter-phase oscillation at a first reduction resonant frequency RRF1 (as described above).

The damping links comprise generally ring shaped sheet elements 116 and axial linking arrangements 117. It will be appreciated that, generally, adjustment of the counter-phase oscillation frequency may be done via the parameters of a damping link 115, more precisely, of the frictional contact surfaces of the contact surface pairing 115.1 and/or the contact force CF or resulting contact pressure CP, respectively, acting at this contact surface pairing 115.1.

Hence, in the present variant, the contact force CF (only highly schematically indicated in Figure 4) present at the respective contact pairing 115.1 is adjustable via the axial linking arrangements 117 forming a contact force adjustment device of the damping link 115 to provide the appropriate damping characteristic.

As can be seen from Figure 4, the contact force adjustment device 117 comprises a screw element 117.1, reaching through a central bore within a sleeve element 114.3. A screw head 117.2 of the screw element 117.1 and a nut 117.3 engaging the threaded end of the screw element 117.1 each clamp an inner circumference of a disc spring 117.4 against the respective free end surface of a sleeve element 114.3 (reaching through a bore 108.6, 109.6 within the respective brake disc 108.1, 109.1). The outer circumference of the respective disc spring 117.4 abuts against a spacer ring 117.5, which surrounds the respective free end of the sleeve element 114 and sits on an axial shoulder formed by an axial recess 108.7 within the respective brake disc 108.1, 109.1.

By selecting the axial thickness of the respective spacer ring 117.5, the deformation and, hence, the elastic restoring force of the respective disc spring 117.4 may be finely adjusted. This restoring force of the respective disc spring 117.4, via the spacer ring 117.5, acts on the respective brake disc 108.1, 109.1 and, ultimately, defines the contact force CF at the contact pairing 115.1.

This configuration further has the advantage that, due to the clamping of the inner circumference of the respective disc spring 117.4 between the sleeve element 114 and the screw head 117.2 or the nut 117.3, respectively, a well-defined and sufficiently large tightening moment may be applied to the screw connection (which is beneficial in terms of loosening safety of the screw connection). Nevertheless, despite this large tightening moment, a comparatively small but well defined contact force CF may be achieved at the contact pairing 115.1.

It will be appreciated that such a small, well defined contact force CF also is beneficial in terms of properly adjusting the counter-phase oscillation frequency band OFB, since it allows sufficiently large counter-phase oscillation over a broad frequency band.

In this context, it will be appreciated that, obviously, the sleeve element 114.3 reaches through the bore 108.6, 109.6 with a sufficiently large play in the circumferential direction CD in order to allow the mutually independent counter-phase oscillations of the first brake disc 108.1 and the second brake disc 109.1 with respect to the wheel 105.2.

It will be further appreciated that, with other variants, separate sleeve elements may be provided for mounting the first brake disc 108.1 and the second brake disc 109.1. These sleeve elements could then, for example, be mutually shifted in the circumferential direction and interface with the wheel and only the associated brake disc. For example, a (correspondingly shorter) screw 117.1 could be screwed into a threaded axial bore within the web section 105.4 (instead of the nut 117.3), and the sleeve element would then be reduced to a simple spacer sleeve abutting against the web section 105.4 (largely corresponding to the smaller diameter part of sleeve element 114 protruding from the web section 105.4 in Figure 3 and 4).

It will be appreciated that, with certain variants, the torsional vibration reduction mass unit 108 or 109 may be the only torsional vibration reduction mass unit mounted to the specific wheel unit 105. Similarly, the torsional vibration reduction mass unit pair formed by the vibration reduction mass unit 108 and 109 may be the only torsional vibration reduction mass unit pair mounted to the specific wheel unit 105.

With certain variants, for example, the torsional vibration reduction mass unit 108 is a first torsional vibration reduction mass unit defining a first reduction resonant frequency RRF1, and the second torsional vibration reduction mass unit 109 is connected to the wheel unit 105 at a different location, e.g., at a different wheel 105.2 of the wheel unit 105, the second torsional vibration reduction mass then defining a second reduction resonant frequency RRF2 of a counter-phase oscillation of the second torsional vibration reduction mass 109.1, which is of the same order as the first reduction resonant frequency RRF1 (i.e., not simply a frequency in the range of a higher or lower order resonant frequency of the first torsional vibration reduction mass unit 108) and has an intentional offset ΔRRF from the first reduction resonant frequency RRF1. The intentional offset preferably (and typically) exceeds an offset caused by maximum manufacturing tolerances defined for the running gear unit.

It will be appreciated, however, that in the present example, at the other, second wheel 105.2 a third torsional vibration reduction mass unit 118 and a fourth torsional vibration reduction mass unit 119 are provided. These two torsional vibration reduction mass units 118 and 119 are largely identical to the torsional vibration reduction mass units 108 and 109, with the sole difference that the pair of the third and fourth torsional vibration reduction mass units 118, 119 (torsionally rigidly coupled to each other) is coupled in a torsionally compliant manner to the second wheel 105.2 to exhibit the counter-phase oscillation at the second reduction resonant frequency RRF2 (as described above).

To show the effect of the torsional vibration reduction mass unit pairs 108, 109 and 118, 119, Figure 8 first shows the torsional vibration response to torsional vibration excitation VE at a conventional reference wheel set without such torsional vibration reduction mass units.

The reference wheel set corresponds to the wheel set 105 (in a new, unworn state), but has the brake disc pairs 108.1, 109.1 and 118.1, 119.1 coupled in a torsionally rigid manner to the respective wheel 105.2. In Figure 9, diagram 110.1 shows the torsional vibration response at the first brake disc pair 108.1, 109.1, diagram 110.2 shows the torsional vibration response at the second brake disc pair 118.1, 119.1, and diagram 110.3 shows the torsional vibration response at the reference wheel set 105. More precisely, the respective torsional vibration response is represented by the respective maximum circumferential acceleration CA detected at the respective component and over the excitation frequency EF.

As can be seen from Figure 8, the unworn reference wheel set exhibits pronounced torsional vibration resonance TVR at a torsional vibration resonance frequency of about $TVRF_{unworn} = 84$ Hz. Due to the rigid coupling, similar applies to the first and second brake disc pairs 108.1, 109.1 and 118.1, 119.1. Furthermore, as is indicated in Figure 8 by the dashed contour 110.4, over the lifetime of the reference wheel set, due to the wear related effects as outlined above, the torsional vibration response undergoes noticeable changes shifting the response towards higher frequencies.

With the wheel set 105 of the present variant (and contrary to the reference wheel set), the first brake disc pair 108.1, 109.1 and the second brake disc pair 118.1, 119.1 are configured and arranged to oscillate mutually independently about the axis of rotation 105.3 in counter-phase with respect to the respective wheel 105.2 to reduce overall torsional vibration TV of the wheel set 105.

Figure 9 shows the torsional vibration response at wheel set 105 (in a new, unworn state) to the torsional vibration excitation VE, i.e. an excitation which is identical to the excitation VE used for the reference wheel set (as described in the context of Figure 8). In Figure 9, diagram 111.1 shows the torsional vibration response at the first brake disc pair 108.1, 109.1, diagram 111.2 shows the torsional vibration response at the second brake disc pair 118.1, 119.1, and diagram 111.3 shows the torsional vibration response at the wheel 105.2. Again, the respective torsional vibration response is represented by the respective maximum circumferential acceleration CA detected at the respective component over the excitation frequency EF.

As can be clearly seen from diagram 111.1 of Figure 9, the first torsional vibration reduction mass unit pair 108, 109 with the first brake discs 108.1, 109.1 exhibits a (first order) first reduction resonant frequency RRF1 of its counter-phase oscillation, which is located in the area of RRF1 = 84 Hz, i.e. a first reduction resonant frequency RRF1 which is in the area of the torsional vibration resonance frequency $TVRF_{unworn}$ of the unworn wheelset 105 (see diagram 110.3 of Figure 7).

Hence, in other words, in the present example, the first torsional vibration reduction mass unit pair 108, 109 is tuned to an unworn state of the wheel set 105 (i.e. to a first torsional resonant frequency $TVRF1 = TVRF_{unworn} = 84$ Hz of the wheel set 105), such that efficient passive torsional vibration reduction in this new or unworn state is achieved at the wheel set 105 as can be seen from diagram 111.3. More precisely, diagram 111.3 clearly shows that the torsional vibration at the wheel set 105 is considerably reduced to a maximum of only about 42% of the torsional vibration of the reference wheel set at the same excitation.

As can be further seen from diagram 111.2 of Figure 9, the second torsional vibration reduction mass unit pair 118, 119 exhibits a second reduction resonant frequency RRF2 of the counter-phase oscillation of the second brake disc pair 118.1, 119.1, which is of the same order (i.e. also of first order) as the first reduction resonant frequency RRF1, but has an intentional offset $\Delta$RRF from the first reduction resonant frequency RRF1. More precisely, the second reduction resonant frequency RRF2 is located in the area of RRF2 = 92 Hz (i.e. $\Delta$RRF = 8 Hz).

In the present example, the second torsional vibration reduction mass unit pair 118, 119 is tuned to a (later) fully worn state of the wheel set 105, where exchange of the wheels 105.2 is required by the operator of the vehicle 101. In this fully worn state, the wheel set 105 exhibits pronounced torsional vibration at an increased second torsional resonant frequency $TVRF2 = TVRF_{worn} = 92$ Hz, such that a wheel unit lifetime resonant frequency gap of about LRFG = 8 Hz results between $TVRF_{unworn}$ and $TVRF_{worn}$. Hence, with the present variant, efficient passive torsional vibration reduction is also obtained at this later point in time of the lifecycle of the wheel set 105.

It will be appreciated that, in the present variant, the intentional offset $\Delta$RRF clearly and pronouncedly exceeds an offset caused by maximum manufacturing tolerances defined for the running gear 103, in particular defined for the wheel set 105. Such an offset caused by maximum manufacturing tolerances typically would be well below 1 Hz.

Hence, with the present variant, efficient torsional vibration reduction over an extended period of time or usage, respectively, of the vehicle 101 is achieved by this intentional and noticeable offset $\Delta$RRF between the first reduction resonant frequency RRF1 and the second reduction resonant frequency RRF2. Hence, in a very simple manner, the passive vibration reduction system of the present variant is efficient in more than one state in the lifecycle of the wheel set 105.

In the present example, the first reduction resonant frequency RRF1 differs from the first wheel unit resonant frequency TVRF1 by less than 5%. Similar applies to the second reduction resonant frequency RRF2, which differs from the second wheel unit resonant frequency TVRF2 also by less than 5%. It will be appreciated however, that with certain other preferred variants, the first reduction resonant frequency RRF1 may differ from the first wheel unit resonant frequency TVRF1 by at most 50%, preferably at most 25%, more preferably by at most 5% to 15%, of the wheel unit lifetime resonant frequency gap LRFG, in order to provide proper and elevated torsional vibration reduction in the initial part of the lifecycle of the wheel unit 105 is. In addition or as an alternative, be provided that the second reduction resonant frequency RRF2 differs from the second wheel unit resonant frequency TVRF2 by at most 50%, preferably at most 25%, more preferably by at most 5% to 15%, of the wheel unit lifetime resonant frequency gap LRFG, in order to provide proper and elevated torsional vibration reduction in the terminal part of the lifecycle of the wheel set 105.

Furthermore, in the present example, the second reduction resonant frequency RRF2 differs from the first reduction resonant frequency RRF1 by about 100% of the wheel unit lifetime resonant frequency gap LRFG. With other variants, however, it may be provided that the second reduction resonant frequency RRF1 differs from the first reduction resonant frequency RRF2 by 20% to 100%, preferably 30% to 80%, more preferably by 40% to 70%, of the wheel unit lifetime resonant frequency gap LRFG, in order to provide proper and elevated torsional vibration reduction is achieved over a comparatively large torsional vibration frequency band.

It will be appreciated in this context that, in the present example with the electric drive system 107, electric (or regenerative) braking is used as the main type or preferred type of service brake, such that the brake discs 108.1 and 109.1 are fairly rarely used during operation of the vehicle 101, namely typically only in emergency braking situations. Hence, such the brake discs 108.1, 109.1 and 118.1, 119.1 are well-suited for providing torsional vibration reduction under most operating conditions of the vehicle 101, in particular under all electric braking situations where no use is made of the brake discs 108.1, 109.1 and 118.1, 119.1.

Furthermore, in the present example, the second reduction resonant frequency RRF2 differs from the first reduction resonant frequency RRF1 by about 9.5% of the first reduction resonant frequency RRF1. With certain variants, the second reduction resonant frequency RRF2 may also differ from the first reduction resonant frequency by at least 2%, preferably by 5% to 25%, more preferably by 10% to 20%, of the first reduction resonant frequency RRF1.

As becomes apparent from the diagrams 111.1 and 111.2 of Figure 9, in the present example, detuning of the frequency of the counter-phase oscillation of the respective brake disc pair 108.1, 109.1 and 118.1, 119.1 is provided in order to broaden the counter-phase oscillation frequency band OFB in which the respective torsional vibration reduction mass unit 108 and 109 provides noticeable and sufficient torsional vibration reduction (as can be seen from diagrams 111.1 and 111.2 of Figure 9).

It will be appreciated that the amount of torsional vibration reduction to be achieved within the counter-phase oscillation frequency band OFB may vary as a function of the amplitude of the torsional vibration on the wheel set 105. Preferably, the counter-phase oscillation, in the respective counter-phase oscillation frequency band OFB, provides reduction of the torsional vibration of the wheel set 105 by at least 40%, preferably at least 50%, more preferably at least 65%, compared to a reference state, where the brake discs 108.1, 109.1 and 118.1, 119.1 are missing or torsionally rigidly coupled to the wheel 105.2. In these cases a particularly favorable reduction of torsional vibration may be achieved. Furthermore, in the present example, the width of the counter-phase oscillation frequency band OFB is more than 30% of the lifetime resonant frequency gap LRFG..

To achieve appropriate broadband counter-phase oscillation, a corresponding damping of the counter-phase oscillation of the respective brake disc 108.1, 109.1 and 118.1, 119.1 is provided by coupling the latter to the web section 105.4 of the respective wheel 105.2 via the damping link 115 providing damping of the counter-phase oscillation.

In the present variant, the damping link 115 includes a frictional contact between the respective brake disc 108.1, 109.1 and the wheel 105.2, more precisely, the web section 105.4. In the present variant, the frictional contact takes place via an intermediate element in the form of the sheet elements 116 located axially between the respective brake disc 108.1, 109.1 and the wheel 105.2 and torsionally rigidly connected to the respective brake disc 108.1, 109.1 by the sleeve elements 114 (extending substantially without play in the circumferential direction CD through mating recesses within the sheet element 116). The respective sheet element has a first contact surface 116.1 contacting the associated brake disc 108.1, 109.1 and a second contact surface 116.2 contacting the wheel 105.2.

It will be appreciated that, with other variants, the intermediate element 116 may also be mounted in a different way. In particular, it may be connected in a torsionally rigid manner the wheel 105.2, while being movable in the circumferential direction with respect to the respective brake disc 108.1, 109.1. Furthermore, it may also be movable in the circumferential direction with respect to, both, the wheel 105.2 and the respective brake disc 108.1, 109.1.

Moreover, with certain variants, in particular, with variants where the axial protrusion of the brake disc 108.1 is formed by rib-shaped protrusions, the intermediate element may be formed by cap-like elements only covering the end section of the protrusion.

In the present example, each damping link 115 includes a contact surface pairing 115.1 which defines a frictional damping characteristic FDC of the damping link 115 and allows very simple and precise fine-tuning of the frictional damping characteristic FDC and, hence, of the bandwidth of the counter-phase oscillation frequency band OFB. The contact surface pairing 115.1 is formed by the first contact surface 116.1 and the associated wheel unit contact surface 105.5 formed at the web section 105.4 of the wheel 105.2.

It will be appreciated, however, that with other variants, the frictional contact providing the damping link functionality may also be formed directly between the brake disc 108.1, 109.1 and the wheel 105.2 (i.e., without the interposition of any sheet element 116). It will be further appreciated that, with other variants, one or more further (eventually even substantially identically designed) intermediate elements 116 may be provided between the brake disc 108.1, 109.1 and the wheel 105.2 (as it is indicated in Figure 3 and 4 by the dashed contour 116.3). Here, the contact conditions at the respective contact pairing may be selected such that damping frictional motion takes place at one defined surface pairing, for example, between two intermediate elements.

In the present example, the contact surface pairing 115.1 comprises a friction reducing contact surface, which is configured to reduce a coefficient of friction prevailing in the contact surface pairing 115.1 compared to a coefficient of friction prevailing in the contact pairing between the web section 105.4 and the intermediate sheet element 116. Furthermore, this friction reducing contact surface is configured to reduce the coefficient of friction prevailing in the contact surface pairing 115.1 compared to a reference situation where the respective brake disc contact surface 108.5, 109.5 would directly contact the web section 105.4 (i.e., a reference contact situation without such an intermediate element 116).

In the present example, the friction reducing contact surface is formed by the contact surface 116.1 of the intermediate element 116. More precisely, the friction reducing surface 116.1 comprises a friction reducing material in the form of a friction reducing coating comprising molybdenum, which in addition provides friction corrosion reduction. It will be appreciated that any desired and suitable friction reducing material may be used for such a coating or the intermediate sheet element 116. Preferably, in case of the intermediate sheet element 116, the friction reducing material comprises stainless steel.

It should be noted in this context that the friction reducing contact surface at the specific advantage that it allows sufficiently pronounced counter-phase oscillation while still providing appropriate damping and, hence, broadening of the counter-phase oscillation frequency band OFB. It is further to be noted that, with other variants, such a friction reducing contact surface may also be formed at either one of the brake discs, 108.1, 109.1 or the wheel 105.2.

In the present example, the respective torsional linking arrangement 112 (113), in the mounted state, is substantially symmetric with respect to the radial direction RD, in order to provide identical oscillation behavior in both directions along the circumferential direction, i.e. a defined reduction resonant frequency RRF1, RRF2. Furthermore, in the present example, the respective torsional linking arrangement 112 (113), in the mounted state, is substantially symmetric with respect to a plane perpendicular to the radial direction RD.

It will be appreciated that the intermediate sheet element 116 has a further great advantage insofar as it introduces an additional thermal resistance between the respective brake disc 108.1, 109.1 and the wheel 105.2. This noticeably reduces heat transfer from the respective brake disc 108.1, 109.1 into the wheel 105.2. For example, by this means, problems resulting from increased heat input into the wheel 105.2, such as, for example, damage of a protective coating etc. of the wheel 105.2, can be alleviated due to the reduced heat input.

As has been outlined above, this additional thermal resistance may already be generated due to the mere presence of the intermediate sheet element 116 at the respective interface between the brake disc 108.1, 109.1 and the wheel 105.2. Apparently, this additional thermal resistance can be further increased by selecting appropriate materials and/or an appropriate geometry and/or surface design at the respective interface.

In the present variant, the intermediate sheet element 116, in the radial direction, extends beyond the (generally ring shaped) wheel unit contact surface 105.5, over which it contacts the wheel 105.2. By this means, a further reduction of the heat transfer from the brake disc 108.1, 109.1 to the wheel 105.2 is achieved, since the intermediate sheet element 116 forms a simple heat shield element reducing the amount of heat introduced into the wheel 105.2 from the heated up brake disc 108.1, 109.1 (e.g. under heavy braking load), both via convective heat transfer and radiant heat transfer.

Hence, in the present example, the respective brake disc 108.1, 109.1 has a maximum reduction mass diameter $DBD_{max}$ in the radial direction RD and the intermediate sheet element 116 has a maximum (or outer) intermediate element diameter $IED_{max}$ in the radial direction RD, which is about 100% of the maximum (or outer) reduction mass diameter $DBD_{max}$. In addition, the respective brake disc 108.1, 109.1 has a minimum reduction mass diameter $DBD_{min}$ in the radial direction RD and the intermediate sheet element 116 has a minimum (or inner) intermediate element diameter $IED_{min}$ in the radial direction RD, which is about 100% of the minimum (or inner) reduction mass diameter $DBD_{min}$.

It will be appreciated that the intermediate sheet element 116 may be composed of any desired and suitable materials or material combinations. In the present example, the intermediate sheet element 116 is a simple to manufacture and robust, generally ring shaped sheet metal element.

It will be appreciated that, with certain variants as is the case with the present example, an identical configuration is chosen at the other wheel 105.2 of the wheel set 105. Hence, identical torsional vibration reduction mass unit pairs 108, 109 and 118, 119 may be provided at each of the two wheels 105.2.

The present invention, in the foregoing, has been described exclusively by means of examples where brake discs 108.1, 108.9 integrate the function of the respective torsional vibration reduction mass. It will be appreciated, however, that, with other variants, instead of the brake discs, components may be used as a vibration reduction mass which exclusively have the function of providing torsional vibration reduction or integrate a function other than braking.

Furthermore, the present invention, in the foregoing, has been described exclusively by means of examples where the brake discs 108.1, 108.9 are mounted to the respective wheel 105.2 of the wheel set 105. It will be appreciated, however, that with other variants the respective torsional vibration reduction mass may be connected to any desired part of the wheel set.

With certain variants also requiring only very few modifications in the overall design of the wheel set, the first torsional vibration reduction mass pair and/or the second torsional vibration reduction mass pair and/or one or more further vibration reduction masses or mass pairs may be coupled to the wheel set shaft 105.1, in particular, at a location remote from the respective wheel 105.2, as it is indicated, for example, by the dashed contours 120, where two vibration reduction mass pairs (e.g., two brake disc pairs) 120.1 and 120.2 are mounted in a torsionally compliant manner to a web element 120.3 rigidly connected to the wheel set shaft 105.1. This variant is particularly beneficial, for example, for wheel unit designs where building space restrictions or other reasons do not allow mounting the torsional vibration reduction mass to the wheel 105.2.

It will be appreciated that, for example, a third torsional vibration reduction mass unit pair 120 and a fourth torsional vibration reduction mass unit pair 121 are provided (see Figure 2). These two torsional vibration reduction mass unit pairs 120 and 121 are largely identical to the torsional vibration reduction mass unit pairs 108, 109 and 118, 119, with the sole difference that the third torsional vibration reduction mass unit pair 120 has a (first order) third reduction resonant frequency RRF3 of its counter-phase oscillation, while the fourth torsional vibration reduction mass unit pair 121 has a (first order) fourth reduction resonant frequency RRF4 of its counter-phase oscillation.

In the present example, both, the third reduction resonant frequency RRF3 and the fourth reduction resonant frequency RRF4 have a further intentional offset from the first reduction resonant frequency RRF1 and from the second reduction resonant frequency RRF2. Here as well, the further intentional offset exceeds an offset caused by maximum manufacturing tolerances defined for the wheel set 105.

In the present example, the intentional offset between the first reduction resonant frequency and the second reduction resonant frequency ΔRRF is a first intentional offset ΔRRF1 and the further intentional offset is a second offset ΔRRF2, the second offset ΔRRF2 being about 30% of the first intentional offset ΔRRF1. In the present example, the third reduction resonant frequency RRF3 and the fourth reduction resonant frequency RRF4 are located between the first reduction resonant frequency RRF1 and the second reduction resonant frequency RRF2. Furthermore, the third reduction resonant frequency RRF3 and the fourth reduction resonant frequency RRF4 are also mutually offset by a third intentional offset ΔRRF3, which also is about 30% of the first intentional offset ΔRRF1. Hence, four different reduction resonant frequencies RRF1 to RRF4 are implemented, such that particularly even coverage of a broad frequency band of torsional vibration reduction is achieved at the wheel set 105.

Finally, the present invention, in the foregoing, has only been described by way of an example for rail vehicles. It will be appreciated, however, that the present invention may also be used for any other type of vehicle experiencing similar problems with torsional vibration at its wheel units..

**Claims**

1. A running gear unit, in particular for a rail vehicle, comprising

    - a wheel unit (105), and
    - a torsional vibration reduction mass unit (108, 109);
    wherein
    - said wheel unit (105) comprises a wheel unit shaft (105.1) and at least one wheel (105.2),
    - said wheel unit shaft (105.1) defines an axis of rotation (105.3), said axis of rotation (105.3) defining an axial direction and a radial direction of said wheel unit (105) as well as a circumferential direction about said axis of rotation (105.3);
    - said wheel (105.2) is coupled to said wheel unit shaft (105.1) in a manner torsionally rigid about said axis of rotation (105.3) and is configured to run on a track;
    - said torsional vibration reduction mass unit (108, 109) comprises a torsional vibration reduction mass (108.1) coupled to said wheel unit (105) in a manner torsionally compliant about said axis of rotation via at least one torsional linking arrangement (112, 113), in particular, via a plurality of such torsional linking arrangements distributed along said circumferential direction;
    - said torsional vibration reduction mass (108.1) is configured to oscillate about said axis of rotation (105.3) in counter-phase with respect to a component (105.2, 120.3) of said wheel unit (105), in particular, with respect to said wheel (105.2), to reduce torsional vibration of said wheel unit (105);
    - said torsional vibration reduction mass unit (108, 109) defines a reduction resonant frequency of said counter-phase oscillation of said first torsional vibration reduction mass (108.1);
    - said torsional linking arrangement (112, 113) is compliant in said circumferential direction and comprises a first support element (112.1), a second support element (112.2), and a spring unit (112.4) with at least one spring element (112.5, 112.6, 112.13, 112.14);

- said first support element (112.1) is connected to one of said wheel unit (105) and said torsional vibration reduction mass (108.1) in a manner rigid in said circumferential direction;
- said second support element (112.2) is connected to the other one of said wheel unit (105) and said torsional vibration reduction mass (108.1) in a manner rigid in said circumferential direction;
- said at least one spring element (112.5, 112.6, 112.13, 112.14) is arranged and acts kinematically in series between said first support element (112.1) and said second support element (112.2) to provide said compliance of said linking arrangement (112, 113) at least in a first torsional direction along said circumferential direction, **characterized in that**
- said at least one spring element (112.5, 112.6, 112.13, 112.14) comprises an elongated spring section (112.7) which is elongated along the axial direction,
wherein
- said spring section (112.7) is arranged and configured to provide said compliance of said linking arrangement (112, 113) at least in said first torsional direction along said circumferential direction by a bending compliance about a bending axis (112.8) which is at least substantially parallel to a plane defined by said radial direction and said circumferential direction.

2. The running gear unit according to claim 1, wherein at least one of the following applies:

- said spring section (112.7) is rod shaped or plate shaped, in particular, formed by a leaf spring element;
- said spring section (112.7) tapers between said first support element (112.1) and said second support element (112.2), said spring section (112.7), in particular, tapering from said first support element (112.1) towards said second support element (112.2);
- said spring section (112.7) tapers by at least decreasing its dimension in said circumferential direction.

3. The running gear unit according to claim 1 or 2, wherein

- said spring section (112.7) is elongated along a longitudinal axis (112.9) of said at least one spring element (112.5, 112.6, 112.13, 112.14), and
- said at least one spring element (112.5, 112.6, 112.13, 112.14) is configured to contact at least one of said first support element (112.1) and said second support element (112.2) via a at least one contact element (112.10, 112.11);

wherein at least one of the following applies:

- said at least one contact element (112.10, 112.11) protrudes from said spring section (112.7) in a direction transverse to said longitudinal axis (112.9) of said at least one spring element (112.5, 112.6, 112.13, 112.14), in particular, along said torsional direction;
- said at least one contact element (112.10, 112.11), along said longitudinal axis (112.9) of said at least one spring element (112.5, 112.6, 112.13, 112.14), is located at a free end of said at least one spring element (112.5, 112.6, 112.13, 112.14) or at a central section of said at least one spring element (112.5, 112.6, 112.13, 112.14), wherein, in particular, a first contact element (112.10) is located at said central section and a second contact element (112.11) is located at a free end of said at least one spring element (112.5, 112.6, 112.13, 112.14);
- said at least one contact element (112.10, 112.11) is monolithically integrated into said at least one spring element (112.5, 112.6, 112.13, 112.14).

4. The running gear unit according to any one of claims 1 to 3, wherein

- said at least one spring element (112.5) is a first spring element and said spring unit (112.4) comprises a second spring element (112.6), and
- said second spring element (112.6) is arranged and acts kinematically in series between said first support element (112.1) and said second support element (112.2) to provide said compliance of said linking arrangement (112, 113) in a second torsional direction along said circumferential direction and opposite to said first torsional direction;

wherein, in particular, at least one of the following applies:

- said second spring element (112.6) is configured in a manner substantially identical to said first spring element (112.5);

- said first spring element (112.5) and said second spring element (112.6) are under a bending pre-stress about their respective bending axis (112.8) in a neutral state of said linking arrangement (112, 113);
- said spring unit (112.4) comprises a third spring element (112.13) which is arranged and acts kinematically in parallel to said first spring element (112.5) between said first support element (112.1) and said second support element (112.2) to provide said compliance of said linking arrangement (112, 113) in said first torsional direction, said third spring element (112.13), in particular, being configured in a manner substantially identical to said first spring element (112.5);
- said spring unit (112.4) comprises a fourth spring element (112.14) which is arranged and acts kinematically in parallel to said second spring element (112.6) between said first support element (112.1) and said second support element (112.2) to provide said compliance of said linking arrangement (112, 113) in said second torsional direction, said fourth spring element (112.14), in particular, being configured in a manner substantially identical to said second spring element (112.6).

5. The running gear unit according to any one of claims 1 to 4, wherein

- said torsional vibration reduction mass (108.1) is a first torsional vibration reduction mass;
- said torsional vibration reduction mass unit (108, 109) comprises a second torsional vibration reduction mass (109.1) coupled to said wheel unit (105) in a manner torsionally compliant about said axis of rotation (105.3) and configured to oscillate about said axis of rotation (105.3) in counter-phase with respect to said component (105.2, 120.3) of said wheel unit (105) to reduce torsional vibration of said wheel unit (105);
- said second torsional vibration reduction mass (109.1) is coupled to said wheel unit (105) via said at least one torsional linking arrangement (112, 113), in particular, via said plurality of said torsional linking arrangements (112, 113);
- said torsional linking arrangement (112, 113) comprises a third support element (112.16) connected to said second torsional vibration reduction mass (109.1) in a manner rigid in said circumferential direction;
- said at least one spring element (112.5, 112.6, 112.13, 112.14) is arranged and acts kinematically in series between said third support element (112.16) and one of said first support element (112.1) and said second support element (112.2) to provide compliance of said linking arrangement (112, 113) between said wheel unit (105) and said second torsional vibration reduction mass (109.1) at least in said first torsional direction along said circumferential direction;

6. The running gear unit according to claim 5, wherein

- said spring section (112.7) is a first spring section and said at least one spring element (112.5, 112.6, 112.13, 112.14) comprises a second spring section (112.15),

wherein at least one of the following applies:

- said second spring section (112.15) is configured to provide said compliance of said linking arrangement (112, 113) between said wheel unit (105) and said second torsional vibration reduction mass (109.1) by a bending compliance about a bending axis (112.8) which is at least substantially parallel to a plane defined by said radial direction and said circumferential direction;
- said second spring section (112.15) tapers along a longitudinal axis (112.9) of said at least one spring element (112.5, 112.6, 112.13, 112.14), said second spring section (112.15), in particular, at least one of (i) tapering towards said third support element (112.16) and (ii) tapering by at least decreasing its dimension in said circumferential direction;
- said at least one spring element (112.5, 112.6, 112.13, 112.14) is configured to contact said third support element (112.16) via a third contact element (112.12), said third contact element (112.12), in particular, at least one of (i) protruding from said second spring section (112.15) in a direction transverse to said longitudinal axis (112.9) of said at least one spring element (112.5, 112.6, 112.13, 112.14), (ii) protruding along said torsional direction, (iii) being located at a free end of said at least one spring element (112.5, 112.6, 112.13, 112.14), and (iv) being monolithically integrated into said at least one spring element (112.5, 112.6, 112.13, 112.14).

7. The running gear unit according to any one of claims 1 to 6, wherein

- said at least one spring element (112.5, 112.6, 112.13, 112.14) is at least partially received within a recess (112.18) of said first support element (112.1);

wherein, in particular, at least one of the following applies:

- said recess (112.18) is configured to receive at least part of said spring section (112.7) with sufficient play at least in said circumferential direction such that said spring section (112.7) can bend to provide said bending compliance about said bending axis (112.8);
- said recess (112.18) is one of an elongated bore and an elongated slot of said first support element (112.1);
- said recess (112.18) and/or said first support element (112.1) is formed to provide at least one hard stop section (112.19, 114.2) configured to limit bending of said at least one spring element (112.5, 112.6, 112.13, 112.14) about said bending axis (112.8) during normal operation of said running gear unit (103).

8. The running gear unit according to any one of claims 1 to 7, wherein at least one of the following applies:

- a rigidity of said at least one spring element (112.5, 112.6, 112.13, 112.14) is selected such that a maximum torsional moment to be transmitted about said rotational axis between said torsional vibration reduction mass and said wheel unit (105) during normal operation of said running gear unit (103) is taken exclusively by elastic deformation of said at least one spring element (112.5, 112.6, 112.13, 112.14) of said at least one torsional linking arrangement (112, 113);
- a rigidity of said at least one spring element (112.5, 112.6, 112.13, 112.14) is selected such that a maximum torsional moment to be transmitted about said rotational axis between said torsional vibration reduction mass and said wheel unit (105) during normal operation of said running gear unit causes a maximum deflection of said at least one spring element (112.5, 112.6, 112.13, 112.14), in particular, in said torsional direction, by less than 1.0 mm, preferably less than 0.5 mm, more preferably 0.4 mm to 0.1 mm;
- a hard stop unit (112.19, 114.2) is formed, in particular, by surfaces of said torsional vibration reduction mass and said wheel unit (105), said hard stop unit (112.19, 114.2) being configured to limit relative motion between said torsional vibration reduction mass (108.1, 109.1) and said wheel unit (105) about said rotational axis (105.3) if a predefined torsional moment, in particular, a maximum torsional moment, to be transmitted about said rotational axis (105.3) between said torsional vibration reduction mass (108.1, 109.1) and said wheel unit (105) during normal operation of said running gear unit (103) is exceeded;
- said at least one torsional linking arrangement (112, 113) is configured to allow thermally induced expansion in said radial direction between said torsional vibration reduction mass and said wheel unit (105).

9. The running gear unit according to any one of claims 1 to 8, wherein

- said torsional vibration reduction mass unit (108, 109) is a first torsional vibration reduction mass unit defining a first reduction resonant frequency;
- a second torsional vibration reduction mass unit (118, 119) is connected to said wheel unit (105), said second torsional vibration reduction mass unit (118, 119) comprising a further torsional vibration reduction mass (119.1) coupled to said wheel unit (105) in a manner torsionally compliant about said axis of rotation (105.3);
- said second torsional vibration reduction mass unit (118, 119) defines a second reduction resonant frequency of a counter-phase oscillation of said further torsional vibration reduction mass, which is of the same order as said first reduction resonant frequency and has an intentional offset from said first reduction resonant frequency, said intentional offset, in particular, exceeding an offset caused by maximum manufacturing tolerances defined for said running gear unit,
wherein, in particular,
- said at least one wheel (105.2) has an unworn state and a fully worn state, where exchange of said at least one wheel (105.2) is required by an operator of said running gear unit,
- said torsional vibration of said wheel unit (105) has a first wheel unit resonant frequency in said unworn state and a second wheel unit resonant frequency in said fully worn state, and
- said first wheel unit resonant frequency and said second wheel unit resonant frequency define a wheel unit lifetime resonant frequency gap.

10. The running gear unit according to claim 9, wherein at least one of the following applies:

- said first reduction resonant frequency differs from said first wheel unit resonant frequency by at most 50%, preferably at most 25%, more preferably by at most 5% to 15%, of said wheel unit lifetime resonant frequency gap;
- said first reduction resonant frequency differs from said first wheel unit resonant frequency by at most 30%, preferably at most 20%, more preferably by at most 5% to 15%, of said first wheel unit resonant frequency, said first reduction resonant frequency, in particular, at least substantially corresponding to said first wheel unit resonant frequency;
- said second reduction resonant frequency differs from said second wheel unit resonant frequency by at most 50%, preferably at most 25%, more preferably by at most 5% to 15%, of said wheel unit lifetime resonant frequency gap;
- said second reduction resonant frequency differs from said second wheel unit resonant frequency by at most 30%, preferably at most 20%, more preferably by at most 5% to 15%, of said second wheel unit resonant frequency, said second reduction resonant frequency, in particular, substantially corresponding to said second wheel unit resonant frequency.

11. The running gear unit according to claim 9 or 10, wherein at least one of the following applies:

- said second reduction resonant frequency differs from said first reduction resonant frequency by 20% to 100%, preferably 30% to 80%, more preferably by 40% to 70%, of said wheel unit lifetime resonant frequency gap;
- said second reduction resonant frequency differs from said first reduction resonant frequency by at least 2%, preferably by 5% to 25%, more preferably by 10% to 20%, of said first reduction resonant frequency,
- said second reduction resonant frequency differs from said first reduction resonant frequency by at least 2 Hz, preferably by 5 Hz to 35 Hz, more preferably by 10 Hz to 20 Hz,
- said first reduction resonant frequency and/or said second reduction resonant frequency has a value from 25 Hz to 150 Hz, preferably from 30 Hz to 120 Hz, more preferably from 55 Hz to 115 Hz.

12. The running gear unit according to any one of claims 1 to 11, wherein,

- said torsional vibration reduction mass (108.1) is coupled to said wheel unit (105) via a damping link (115) providing damping of said counter-phase oscillation;

wherein, in particular, at least one of the following applies:

- said damping link (115) includes a frictional contact between said torsional vibration reduction mass and said wheel unit (105)
- said damping link (115) includes a contact surface pairing (115.1) defining a frictional damping characteristic of said damping link (115).

13. The running gear unit according to any one of claims 1 to 12, wherein at least one of the following applies:

- said torsional vibration reduction mass (108.1) is a brake disc of a brake unit of said wheel unit (105);
- said torsional vibration reduction mass (108.1) is coupled to said wheel, in particular, to a web element (105.4) of said wheel (105.2), or coupled to said wheel unit shaft (105.1), in particular, at a location remote from said wheel (105.2);
- said torsional vibration reduction mass (108.1) is a first torsional vibration reduction mass coupled to a first side of said wheel (105.2) and a second torsional vibration reduction mass (109.1) is coupled to a second side of said wheel (105.2), in particular, to a web element (105.4) of said wheel (105.2);
- said torsional vibration reduction mass (108.1) is a first torsional vibration reduction mass and is coupled to a first wheel (105.2) of said wheel unit (105) and a second torsional vibration reduction mass (118.1) is coupled to a second wheel (105.2) of said wheel unit (105).

14. A running gear, in particular for a rail vehicle, with at least one running gear unit according to any one of claims 1 to 13.

15. A method of reducing torsional vibration in a running gear unit, in particular for a rail vehicle, said running gear unit comprising a wheel unit (105) and a torsional vibration reduction mass unit (108, 109), said wheel unit (105) comprising a wheel unit shaft and at least one wheel, said wheel unit shaft defining an axis of rotation (105.3), said axis of rotation (105.3) defining an axial direction and a radial direction of said wheel unit (105) as well as a circumferential direction about said axis of rotation (105.3), said wheel being coupled to said wheel unit shaft in a manner torsionally rigid about said axis of rotation (105.3) and being configured to run on a track, said method comprising:

- coupling a torsional vibration reduction mass to said wheel unit (105) in a manner torsionally compliant about said axis of rotation (105.3) via at least one torsional linking arrangement (112, 113) compliant in said circumferential direction, in particular, via a plurality of such torsional linking arrangements distributed along said circumferential direction, thereby defining a reduction resonant frequency of said counter-phase oscillation of said torsional vibration reduction mass;

- allowing said torsional vibration reduction mass to oscillate about said axis of rotation (105.3) in counter-phase with respect to a component (105.2, 120.3) of said wheel unit (105), in particular, with respect to said wheel, to reduce torsional vibration of said wheel unit (105);

wherein

- a first support element (112.1) of said torsional linking arrangement (112, 113) is connected to one of said wheel unit (105) and said torsional vibration reduction mass in a manner rigid in said circumferential direction;
- a second support element of said torsional linking arrangement (112, 113) is connected to the other one of said wheel unit (105) and said torsional vibration reduction mass in a manner rigid in said circumferential direction;
- at least one spring element of said torsional linking arrangement (112, 113) acts kinematically in series between said first support element (112.1) and said second support element (112.2) to provide said compliance of said linking arrangement (112, 113) at least in a first torsional direction along said circumferential direction,

**characterized in that**

- an elongated spring section (112.7) of said at least one spring element (112.5, 112.6, 112.13, 112.14), said spring section (112.7) being elongated along said axial direction, provides said compliance of said linking arrangement (112, 113) at least in said first torsional direction along said circumferential direction by a bending compliance about a bending axis (112.8) which is at least substantially parallel to a plane defined by said radial direction and said circumferential direction.

**Patentansprüche**

1. Fahrwerkseinheit, insbesondere für ein Schienenfahrzeug, umfassend

- eine Radeinheit (105), und
- eine Torsionsschwingungsreduktionsmasseeinheit (108, 109);

wobei

- die Radeinheit (105) umfasst eine Radeinheitswelle (105.1) und mindestens ein Rad (105.2),
- die Radeinheitswelle (105.1) eine Drehachse (105.3) definiert, wobei die Drehachse (105.3) eine Axialrichtung und eine Radialrichtung der Radeinheit (105) sowie eine Umfangsrichtung um die Drehachse (105.3) definiert;
- das Rad (105.2) mit der Radsatzwelle (105.1) um die Drehachse (105.3) drehstarr gekoppelt ist und für den Lauf auf einer Schiene ausgebildet ist;
- die Torsionsschwingungsreduktionsmasseneinheit (108, 109) eine Torsionsschwingungsreduktionsmasse (108.1) umfasst, die über mindestens eine Torsionskopplungsanordnung (112, 113) um die Drehachse drehnachgiebig mit der Radeinheit (105) gekoppelt ist, insbesondere über mehrere solche Torsionskopplungsanordnungen (112, 113) gekoppelt ist, die in Umfangsrichtung verteilt sind;
- die Torsionsschwingungsreduktionsmasse (108.1) dazu ausgebildet ist, um die Drehachse (105.3) gegenphasig zu einer Komponente (105.2, 120.3) der Radeinheit (105), insbesondere zum Rad (105.2), zu schwingen, um die Drehschwingung der Radeinheit (105) zu reduzieren;
- die Torsionsschwingungsreduktionsmasseneinheit (108, 109) eine Reduktionsresonanzfrequenz der gegenphasigen Schwingung der ersten Torsionsschwingungsreduktionsmasse (108.1) definiert;
- die Torsionsverbindungsanordnung (112, 113) in der Umfangsrichtung nachgiebig ist und ein erstes Stützelement (112.1), ein zweites Stützelement (112.2) und eine Federeinheit (112.4) mit mindestens einem Federelement (112.5, 112.6, 112.13, 112.14) umfasst;
- das erste Stützelement (112.1) in Umfangsrichtung starr mit der Radeinheit (105) oder der Torsionsschwingungsreduktionsmasse (108.1) verbunden ist;
- das zweite Stützelement (112.2) mit der anderen der Radeinheit (105) und der Torsionsschwingungsreduktionsmasse (108.1) in Umfangsrichtung starr verbunden ist;
- das mindestens eine Federelement (112.5, 112.6, 112.13, 112.14) kinematisch in Reihe zwischen dem ersten Stützelement (112.1) und dem zweiten Stützelement (112.2) angeordnet ist und wirkt, um die Nachgiebigkeit der Torsionskopplungsanordnung (112, 113) zumindest in einer ersten Torsionsrichtung entlang der Umfangsrichtung bereitzustellen,

**dadurch gekennzeichnet, dass**

- das mindestens eine Federelement (112.5, 112.6, 112.13, 112.14) einen länglichen Federabschnitt (112.7) aufweist, der sich entlang der Axialrichtung erstreckt,

wobei

- der Federabschnitt (112.7) so angeordnet und konfiguriert ist, dass er die Nachgiebigkeit der Verbindungsanordnung (112, 113) zumindest in der ersten Torsionsrichtung entlang der Umfangsrichtung durch eine Biegenachgiebigkeit um eine Biegeachse (112.8) bereitstellt, die zumindest im Wesentlichen parallel zu einer Ebene verläuft, die durch die Radialrichtung und die Umfangsrichtung definiert ist.

2. Fahrwerkseinheit nach Anspruch 1, wobei mindestens eines von Nachfolgendem zutrifft:

   - der Federabschnitt (112.7) ist stab- oder plattenförmig, insbesondere durch ein Blattfederelement ausgebildet;
   - der Federabschnitt (112.7) verjüngt sich zwischen dem ersten Stützelement (112.1) und dem zweiten Stützelement (112.2), wobei sich der Federabschnitt (112.7) insbesondere vom ersten Stützelement (112.1) zum zweiten Stützelement (112.2) hin verjüngt;
   - der Federabschnitt (112.7) verjüngt sich, indem seine Abmessung zumindest in der Umfangsrichtung abnimmt.

3. Fahrwerkseinheit nach Anspruch 1 oder 2, wobei

   - der Federabschnitt (112.7) entlang einer Längsachse (112.9) des mindestens einen Federelements (112.5, 112.6, 112.13, 112.14) langgestreckt ist, und
   - das mindestens eine Federelement (112.5, 112.6, 112.13, 112.14) dazu konfiguriert ist, mindestens eines von dem ersten Stützelement (112.1) und dem zweiten Stützelement (112.2) über mindestens ein Kontaktelement (112.10, 112.11) zu kontaktieren;

   wobei mindestens eines von Nachfolgendem zutrifft:

   - das mindestens eine Kontaktelement (112.10, 112.11) ragt von dem Federabschnitt (112.7) in eine Richtung quer zur Längsachse (112.9) des mindestens einen Federelements (112.5, 112.6, 112.13, 112.14), insbesondere entlang der Torsionsrichtung, hervor;
   - das mindestens eine Kontaktelement (112.10, 112.11) ist entlang der Längsachse (112.9) des mindestens einen Federelements (112.5, 112.6, 112.13, 112.14) an einem freien Ende des mindestens einen Federelements (112.5, 112.6, 112.13, 112.14) oder an einem Mittelabschnitt des mindestens einen Federelements (112.5, 112.6, 112.13, 112.14) angeordnet, wobei insbesondere ein erstes Kontaktelement (112.10) an dem Mittelabschnitt und ein zweites Kontaktelement (112.11) an einem freien Ende des mindestens einen Federelements (112.5, 112.6, 112.13, 112.14) angeordnet ist;
   - das mindestens eine Kontaktelement (112.10, 112.11) ist monolithisch in das mindestens eine Federelement (112.5, 112.6, 112.13, 112.14) integriert.

4. Fahrwerkseinheit nach einem der Ansprüche 1 bis 3, wobei

   - das mindestens eine Federelement (112.5) ein erstes Federelement ist und die Federeinheit (112.4) ein zweites Federelement (112.6) umfasst, und
   - das zweite Federelement (112.6) kinematisch in Reihe zwischen dem ersten Stützelement (112.1) und dem zweiten Stützelement (112.2) angeordnet ist und wirkt, um die Nachgiebigkeit der Torsionskopplungsanordnung (112, 113) in einer zweiten Torsionsrichtung entlang der Umfangsrichtung und entgegengesetzt zur ersten Torsionsrichtung bereitzustellen;

   wobei insbesondere mindestens eines von Nachfolgendem zutrifft:

   - das zweite Federelement (112.6) ist im Wesentlichen identisch zum ersten Federelement (112.5) ausgebildet;
   - das erste Federelement (112.5) und das zweite Federelement (112.6) stehen in einem neutralen Zustand der Torsionskopplungsanordnung (112, 113) unter einer Biegevorspannung um ihre jeweilige Biegeachse (112.8);
   - die Federeinheit (112.4) umfasst ein drittes Federelement (112.13), das zwischen dem ersten Stützelement (112.1) und dem zweiten Stützelement (112.2) angeordnet ist und kinematisch parallel zu dem ersten Federelement (112.5) wirkt, um die Nachgiebigkeit der Verbindungsanordnung (112, 113) in der ersten Torsionsrichtung bereitzustellen, wobei das dritte Federelement (112.13) insbesondere im Wesentlichen identisch zu dem ersten Federelement (112.5) konfiguriert ist;
   - die Federeinheit (112.4) umfasst ein viertes Federelement (112.14), das zwischen dem ersten Stützelement (112.1) und dem zweiten Stützelement (112.2) angeordnet ist und kinematisch parallel zu dem zweiten Federelement (112.6) wirkt, um die Nachgiebigkeit der Torsionskopplungsanordnung (112, 113) in der zweiten Torsionsrichtung bereitzustellen, wobei das vierte Federelement (112.14) insbesondere im Wesentlichen identisch zu dem zweiten Federelement (112.6) ausgebildet ist.

5. Fahrwerkseinheit nach einem der Ansprüche 1 bis 4, wobei

- die Torsionsschwingungsreduktionsmasse (108.1) eine erste Torsionsschwingungsreduktionsmasse ist;
- die Torsionsschwingungsreduktionsmasseneinheit (108, 109) eine zweite Torsionsschwingungsreduktionsmasse (109.1) umfasst, die mit der Radeinheit (105) um die Drehachse (105.3) drehnachgiebig gekoppelt ist und dazu konfiguriert ist, um die Drehachse (105.3) in Gegenphase zu der Komponente (105.2, 120.3) der Radeinheit (105) zu schwingen, um die Torsionsschwingung der Radeinheit (105) zu reduzieren;
- die zweite Torsionsschwingungsreduktionsmasse (109.1) über die mindestens eine Torsionskopplungsanordnung (112, 113), insbesondere über die Mehrzahl von Torsionskopplungsanordnungen (112, 113), mit der Radeinheit (105) gekoppelt ist;
- die Torsionskopplungsanordnung (112, 113) ein drittes Stützelement (112.16) aufweist, das in Umfangsrichtung starr mit der zweiten Torsionsschwingungsreduktionsmasse (109.1) verbunden ist;
- das mindestens eine Federelement (112.5, 112.6, 112.13, 112.14) kinematisch in Reihe zwischen dem dritten Stützelement (112.16) und einem der ersten Stützelemente (112.1) und des zweiten Stützelements (112.2) angeordnet ist und wirkt, um für Nachgiebigkeit der Verbindungsanordnung (112, 113) zwischen der Radeinheit (105) und der zweiten Torsionsschwingungsreduktionsmasse (109.1) zumindest in der ersten Torsionsrichtung entlang der Umfangsrichtung zu sorgen.

6. Fahrwerkseinheit nach Anspruch 5, wobei

- der Federabschnitt (112.7) ein erster Federabschnitt ist und das mindestens eine Federelement (112.5, 112.6, 112.13, 112.14) einen zweiten Federabschnitt (112.15) umfasst,

wobei mindestens eines von Nachfolgendem zutrifft:

- der zweite Federabschnitt (112.15) ist dazu konfiguriert, die Nachgiebigkeit der Torsionskopplungsanordnung (112, 113) zwischen der Radeinheit (105) und der zweiten Torsionsschwingungsreduktionsmasse (109.1) durch eine Biegenachgiebigkeit um eine Biegeachse (112.8) bereitzustellen, die zumindest im Wesentlichen parallel zu einer Ebene ist, die durch die Radialrichtung und die Umfangsrichtung definiert ist;
- der zweite Federabschnitt (112.15) verjüngt sich entlang einer Längsachse (112.9) des mindestens einen Federelements (112.5, 112.6, 112.13, 112.14), wobei der zweite Federabschnitt (112.15) insbesondere wenigstens eines von (i) sich in Richtung des dritten Stützelements (112.16) verjüngt und (ii) sich durch zumindest Verringerung seiner Abmessung in der Umfangsrichtung verjüngt;
- das mindestens eine Federelement (112.5, 112.6, 112.13, 112.14) ist dazu ausgebildet, das dritte Stützelement (112.16) über ein drittes Kontaktelement (112.12) zu kontaktieren, wobei das dritte Kontaktelement (112.12) insbesondere (i) in einer Richtung quer zur Längsachse (112.9) des mindestens einen Federelements (112.5, 112.6, 112.13, 112.14) vom zweiten Federabschnitt (112.15) hervorsteht, (ii) entlang der Torsionsrichtung hervorsteht, (iii) an einem freien Ende des mindestens einen Federelements (112.5, 112.6, 112.13, 112.14) angeordnet ist und (iv) monolithisch in das mindestens eine Federelement (112.5, 112.6, 112.13, 112.14) integriert ist.

7. Fahrwerkseinheit nach einem der Ansprüche 1 bis 6, wobei

- das mindestens eine Federelement (112.5, 112.6, 112.13, 112.14) zumindest teilweise in einer Aussparung (112.18) des ersten Stützelements (112.1) aufgenommen ist;

wobei insbesondere mindestens eines von Nachfolgendem zutrifft:

- die Aussparung (112.18) ist so konfiguriert, dass sie zumindest einen Teil des Federabschnitts (112.7) mit ausreichend Spiel zumindest in der Umfangsrichtung aufnimmt, so dass sich der Federabschnitt (112.7) biegen kann, um die Biegenachgiebigkeit um die Biegeachse (112.8) bereitzustellen;
- die Ausnehmung (112.18) ist entweder eine Langbohrung oder ein Langschlitz des ersten Trägerelements (112.1);
- die Aussparung (112.18) und/oder das erste Stützelement (112.1) ist so ausgebildet, dass sie mindestens einen harten Anschlagabschnitt (112.19, 114.2) bilden, der dazu konfiguriert ist, die Biegung des mindestens einen Federelements (112.5, 112.6, 112.13, 112.14) um die Biegeachse (112.8) während des Normalbetriebs der Fahrwerkseinheit (103) zu begrenzen.

**8.** Fahrwerkseinheit nach einem der Ansprüche 1 bis 7, wobei mindestens eines von Nachfolgendem zutrifft:

- eine Steifigkeit des mindestens einen Federelements (112.5, 112.6, 112.13, 112.14) ist so gewählt, dass ein im Normalbetrieb der Fahrwerkseinheit (103) zwischen der Torsionsschwingungsreduktionsmasse und der Radeinheit (105) zu übertragendes maximales Torsionsmoment um die Drehachse ausschließlich durch elastische Verformung des mindestens einen Federelements (112.5, 112.6, 112.13, 112.14) der mindestens einen Torsionskopplungsanordnung (112, 113) aufgenommen wird;
- eine Steifigkeit des mindestens einen Federelements (112.5, 112.6, 112.13, 112.14) ist so gewählt, dass ein im Normalbetrieb des Fahrwerks zwischen der Torsionsschwingungsreduktionsmasse und der Radeinheit (105) zu übertragendes maximales Torsionsmoment um die Drehachse eine maximale Auslenkung des mindestens einen Federelements (112.5, 112.6, 112.13, 112.14), insbesondere in Torsionsrichtung, von weniger als 1,0 mm, vorzugsweise weniger als 0,5 mm, weiter vorzugsweise 0,4 mm bis 0,1 mm, bewirkt;
- eine Festanschlageinheit (112.19, 114.2) ist insbesondere durch Oberflächen der Torsionsschwingungsreduktionsmasse und der Radeinheit (105) gebildet, wobei die Festanschlageinheit (112.19, 114.2) dazu ausgebildet ist, eine Relativbewegung zwischen der Torsionsschwingungsreduktionsmasse (108.1, 109.1) und der Radeinheit (105) um die Drehachse (105.3) zu begrenzen, wenn ein vorgegebenes, insbesondere maximal zu übertragendes Torsionsmoment um die Drehachse (105.3) zwischen der Torsionsschwingungsreduktionsmasse (108.1, 109.1) und der Radeinheit (105) im Normalbetrieb der Fahrwerkseinheit (103) überschritten wird;
- die mindestens eine Torsionskopplungsanordnung (112, 113) ist so konfiguriert, dass sie eine thermisch bedingte Ausdehnung in der Radialrichtung zwischen der Torsionsschwingungsreduktionsmasse und der Radeinheit (105) zulässt.

**9.** Fahrwerkseinheit nach einem der Ansprüche 1 bis 8, wobei

- die Torsionsschwingungsreduktionsmasseeinheit (108, 109) eine erste Torsionsschwingungsreduktionsmasseeinheit ist, die eine erste Reduktionsresonanzfrequenz definiert;
- eine zweite Torsionsschwingungsreduktionsmasseneinheit (118, 119) mit der Radeinheit (105) verbunden ist, wobei die zweite Torsionsschwingungsreduktionsmasseneinheit (118, 119) eine weitere Torsionsschwingungsreduktionsmasse (119.1) umfasst, die um die Drehachse (105.3) drehnachgiebig mit der Radeinheit (105) gekoppelt ist;
- die zweite Torsionsschwingungsreduktionsmasseneinheit (118, 119) eine zweite Reduktionsresonanzfrequenz einer gegenphasigen Schwingung der weiteren Torsionsschwingungsreduktionsmasse definiert, die in der gleichen Größenordnung wie die erste Reduktionsresonanzfrequenz liegt und einen beabsichtigten Versatz zu der ersten Reduktionsresonanzfrequenz aufweist, wobei der beabsichtigten Versatz insbesondere einen Versatz überschreitet, der durch für die Fahrwerkseinheit definierte maximale Fertigungstoleranzen bedingt ist, wobei insbesondere
- das mindestens eine Rad (105.2) einen unverschlissenen Zustand aufweist und einen vollständig verschlissenen Zustand aufweist, in dem ein Austausch des mindestens einen Rades (105.2) durch einen Betreiber des Fahrwerks erforderlich ist,
- die Torsionsschwingung der Radeinheit (105) im unverschlissenen Zustand eine erste Radeinheitsresonanzfrequenz und im vollständig verschlissenen Zustand eine zweite Radeinheitsresonanzfrequenz aufweist, und
- die Resonanzfrequenz der ersten Radeinheit und die Resonanzfrequenz der zweiten Radeinheit einen Resonanzfrequenzabstand über die Radeinheitslebensdauer definieren.

**10.** Fahrwerkseinheit nach Anspruch 9, wobei mindestens eines von Nachfolgendem zutrifft:

- sich die erste Reduktionsresonanzfrequenz von der erten Radeinheitsresonanzfrequenz um höchstens 50 %, vorzugsweise höchstens 25 %, weiter vorzugsweise um höchstens 5 % bis 15 %, des Resonanzfrequenzabstands über die Radeinheitslebensdauer unterscheidet;
- die erste Reduktionsresonanzfrequenz unterscheidet sich von der ersten Radeinheitsresonanzfrequenz um höchstens 30 %, vorzugsweise höchstens 20 %, weiter vorzugsweise um höchstens 5 % bis 15 % der ersten Radeinheitsresonanzfrequenz, wobei die erste Reduktionsresonanzfrequenz insbesondere zumindest im Wesentlichen der ersten Radeinheitsresonanzfrequenz entspricht;
- die zweite Reduktionsresonanzfrequenz unterscheidet sich von der zweiten Radeinheitsresonanzfrequenz um höchstens 50 %, vorzugsweise höchstens 25 %, weiter vorzugsweise um höchstens 5 % bis 15 %, des Resonanzfrequenzabstands über die Radeinheitslebensdauer;
- die zweite Reduktionsresonanzfrequenz sich von der zweiten Radeinheitsresonanzfrequenz um höchstens 30 %, vorzugsweise höchstens 20 %, weiter vorzugsweise um höchstens 5 % bis 15 % der zweiten Radeinheitsresonanzfrequenz unterscheidet, wobei die zweite Reduktionsresonanzfrequenz insbesondere im Wesentlichen der zweiten Radeinheitsresonanzfrequenz entspricht.

11. Fahrwerkseinheit nach Anspruch 9 oder 10, wobei mindestens eines von Nachfolgendem zutrifft:

   - die zweite Reduktionsresonanzfrequenz unterscheidet sich von der ersten Reduktionsresonanzfrequenz um 20 % bis 100 %, vorzugsweise 30 % bis 80 %, weiter vorzugsweise um 40 % bis 70 %, des Resonanzfrequenzabstands über die Radeinheitslebensdauer;
   - die zweite Reduktionsresonanzfrequenz unterscheidet sich von der ersten Reduktionsresonanzfrequenz um mindestens 2 %, vorzugsweise um 5 % bis 25 %, besonders bevorzugt um 10 % bis 20 %, der ersten Reduktionsresonanzfrequenz,
   - sich die zweite Reduktionsresonanzfrequenz von der ersten Reduktionsresonanzfrequenz um mindestens 2 Hz, vorzugsweise um 5 Hz bis 35 Hz, besonders bevorzugt um 10 Hz bis 20 Hz unterscheidet,
   - die erste Reduktionsresonanzfrequenz und/oder die zweite Reduktionsresonanzfrequenz weist einen Wert von 25 Hz bis 150 Hz, vorzugsweise von 30 Hz bis 120 Hz, weiter vorzugsweise von 55 Hz bis 115 Hz auf.

12. Fahrwerkseinheit nach einem der Ansprüche 1 bis 11, wobei

   - die Torsionsschwingungsreduktionsmasse (108.1) über ein Dämpfungsverbindung (115) mit der Radeinheit (105) gekoppelt ist, wodurch eine Dämpfung der gegenphasigen Schwingung erreicht wird;

   wobei insbesondere mindestens eines von Nachfolgendem zutrifft:

   - die Dämpfungsverbindung (115) weist einen Reibungskontakt zwischen der Torsionsschwingungsreduktionsmasse und der Radeinheit (105) auf,
   - die Dämpfungsverbindung (115) weist eine Kontaktflächenpaarung (115.1) auf, die eine Reibungsdämpfungscharakteristik der Dämpfungsverbindung (115) definiert.

13. Fahrwerkseinheit nach einem der Ansprüche 1 bis 12, wobei mindestens eines von Nachfolgendem zutrifft:

   - die Torsionsschwingungsreduktionsmasse (108.1) ist eine Bremsscheibe einer Bremseinheit der Radeinheit (105);
   - die Torsionsschwingungsreduktionsmasse (108.1) ist mit dem Rad, insbesondere mit einem Stegelement (105.4) des Rades (105.2), oder mit der Radeinheitswelle (105.1), insbesondere an einer vom Rad (105.2) entfernten Stelle, gekoppelt;
   - die Torsionsschwingungsreduktionsmasse (108.1) ist eine erste Torsionsschwingungsreduktionsmasse, die mit einer ersten Seite des Rades (105.2) gekoppelt ist, und eine zweite Torsionsschwingungsreduktionsmasse (109.1) ist mit einer zweiten Seite des Rades (105.2), insbesondere mit einem Stegelement (105.4) des Rades (105.2), gekoppelt;
   - die Torsionsschwingungsreduktionsmasse (108.1) ist eine erste Torsionsschwingungsreduktionsmasse und mit einem ersten Rad (105.2) der Radeinheit (105) gekoppelt und eine zweite Torsionsschwingungsreduktionsmasse (118.1) ist mit einem zweiten Rad (105.2) der Radeinheit (105) gekoppelt.

14. Fahrwerk, insbesondere für ein Schienenfahrzeug, mit mindestens einer Fahrwerkseinheit nach einem der Ansprüche 1 bis 13.

15. Verfahren zur Reduzierung von Torsionsschwingungen in einem Fahrwerk, insbesondere für ein Schienenfahrzeug, wobei das Fahrwerk eine Radeinheit (105) und eine Torsionsschwingungsreduktionsmasseneinheit (108, 109) umfasst, wobei die Radeinheit (105) eine Radeinheitswelle und mindestens ein Rad umfasst, wobei die Radeinheitswelle eine Drehachse (105.3) definiert, wobei die Drehachse (105.3) eine Axialrichtung und eine Radialrichtung der Radeinheit (105) sowie eine Umfangsrichtung um die Drehachse (105.3) definiert, wobei das Rad um die Drehachse (105.3) drehstarr mit der Radeinheitswelle gekoppelt und zum Laufen auf einem Gleis konfiguriert ist, wobei das Verfahren umfasst:

   - torsionsnachgiebiges Ankoppeln einer Torsionsschwingungsreduktionsmasse an die Radeinheit (105) um die Drehachse (105.3) über mindestens eine in Umfangsrichtung nachgiebige Torsionskopplungsanordnung (112, 113), insbesondere über mehrere entlang der Umfangsrichtung verteilte derartige Torsionskopplungsanordnungen, wodurch eine Reduktionsresonanzfrequenz der gegenphasigen Schwingung der Torsionsschwingungsreduktionsmasse definiert wird;

- Ermöglichen einer gegenphasigen Schwingung der Torsionsschwingungsreduktionsmasse um die Drehachse (105.3) zu einem Bauteil (105.2, 120.3) der Radeinheit (105), insbesondere zu dem Rad, um Torsionsschwingungen der Radeinheit (105) zu reduzieren,

wobei

- ein erstes Stützelement (112.1) der Torsionskopplungsanordnung (112, 113) in Umfangsrichtung starr mit einer von der Radeinheit (105) und oder der Torsionsschwingungsreduktionsmasse verbunden ist;

- ein zweites Stützelement der Torsionskopplungsanordnung (112, 113) in Umfangsrichtung starr mit der anderen von der Radeinheit (105) und der Torsionsschwingungsreduktionsmasse verbunden ist;

- mindestens ein Federelement der Torsionsverbindungsanordnung (112, 113) kinematisch in Reihe zwischen dem ersten Stützelement (112.1) und dem zweiten Stützelement (112.2) wirkt, um die Nachgiebigkeit der Verbindungsanordnung (112, 113) zumindest in einer ersten Torsionsrichtung entlang der Umfangsrichtung bereitzustellen,

**dadurch gekennzeichnet, dass**

- ein länglicher Federabschnitt (112.7) des mindestens einen Federelements (112.5, 112.6, 112.13, 112.14), wobei der Federabschnitt (112.7) entlang der Axialrichtung langgestreckt ist, stellt die Nachgiebigkeit der Verbindungsanordnung (112, 113) zumindest in der ersten Torsionsrichtung entlang der Umfangsrichtung durch eine Biegenachgiebigkeit um eine Biegeachse (112.8) bereit, die zumindest im Wesentlichen parallel zu einer Ebene ist, die durch die Radialrichtung und die Umfangsrichtung definiert ist.

## Revendications

1. Unité de train de roulement, notamment pour véhicule ferroviaire, comprenant

- une unité de roue (105), et
- une unité de masse de réduction des vibrations de torsion (108, 109);

dans laquelle

- ladite unité de roue (105) comprend un arbre d'unité de roue (105.1) et au moins une roue (105.2),

- ledit arbre d'unité de roue (105.1) définit un axe de rotation (105.3), ledit axe de rotation (105.3) définissant une direction axiale et une direction radiale de ladite unité de roue (105) ainsi qu'une direction circonférentielle autour dudit axe de rotation (105.3) ;

- ladite roue (105.2) est couplée audit arbre d'unité de roue (105.1) d'une manière rigide en torsion autour dudit axe de rotation (105.3) et est configurée pour rouler sur une voie;

- ladite unité de masse de réduction des vibrations de torsion (108, 109) comprend une masse de réduction des vibrations de torsion (108.1) couplée à ladite unité de roue (105) d'une manière cédante en torsion autour dudit axe de rotation via au moins un agencement de liaison de torsion (112, 113), en particulier, via une pluralité de tels agencements de liaison de torsion répartis le long de ladite direction circonférentielle ;

- ladite masse de réduction des vibrations de torsion (108.1) est configurée pour osciller autour dudit axe de rotation (105.3) en contre-phase par rapport à un composant (105.2, 120.3) de ladite unité de roue (105), en particulier, par rapport à ladite roue (105.2), pour réduire les vibrations de torsion de ladite unité de roue (105) ;

- ladite unité de masse de réduction des vibrations de torsion (108, 109) définit une fréquence de résonance de réduction de ladite oscillation en contre-phase de ladite première masse de réduction des vibrations de torsion (108.1) ;

- ledit agencement de liaison de torsion (112, 113) est cedant dans ladite direction circonférentielle et comprend un premier élément de support (112.1), un deuxième élément de support (112.2) et une unité de ressort (112.4) avec au moins un élément de ressort (112.5, 112.6, 112.13, 112.14) ;

- ledit premier élément de support (112.1) est relié à l'une de ladite unité de roue (105) et de ladite masse de réduction des vibrations de torsion (108.1) d'une manière rigide dans ladite direction circonférentielle ;

- ledit deuxième élément de support (112.2) est relié à l'autre élément parmi ladite unité de roue (105) et ladite masse de réduction des vibrations de torsion (108.1) d'une manière rigide dans ladite direction circonférentielle ;

- ledit au moins un élément ressort (112.5, 112.6, 112.13, 112.14) est disposé et agit cinématiquement en série entre ledit premier élément de support (112.1) et ledit second élément de support (112.2) pour assurer ladite compliance dudit agencement de liaison (112, 113) au moins dans une première direction de torsion le long de ladite direction circonférentielle,

**caractérisée en ce que**

- ledit au moins un élément de ressort (112.5, 112.6, 112.13, 112.14) comprend une section de ressort allongée (112.7) qui est allongée le long de la direction axiale,

dans laquelle

- ladite section de ressort (112.7) est agencée et configurée pour fournir ledit comportement cédant dudit agencement de liaison (112, 113) au moins dans ladite première direction de torsion le long de ladite direction circonférentielle par une comportement cédant en flexion autour d'un axe de flexion (112.8) qui est au moins sensiblement parallèle à un plan défini par ladite direction radiale et ladite direction circonférentielle.

2. Unité de train de roulement selon la revendication 1, dans laquelle au moins l'un du suivant s'applique :

- ladite section de ressort (112.7) est en forme de tige ou de plaque, en particulier formée par un élément de ressort à lame ;
- ladite section de ressort (112.7) se rétrécit entre ledit premier élément de support (112.1) et ledit deuxième élément de support (112.2), ladite section de ressort (112.7), en particulier, se rétrécissant dudit premier élément de support (112.1) vers ledit deuxième élément de support (112.2) ;
- ladite section de ressort (112.7) se rétrécit en diminuant au moins sa dimension dans ladite direction circonférentielle.

3. Unité de train de roulement selon la revendication 1 ou 2, dans laquelle

- ladite section de ressort (112.7) est allongée le long d'un axe longitudinal (112.9) dudit au moins un élément de ressort (112.5, 112.6, 112.13, 112.14), et
- ledit au moins un élément ressort (112.5, 112.6, 112.13, 112.14) est configuré pour entrer en contact avec au moins l'un dudit premier élément de support (112.1) et dudit deuxième élément de support (112.2) via au moins un élément de contact (112.10, 112.11) ;

dans lequel au moins l'un du suivant s'applique :

- ledit au moins un élément de contact (112.10, 112.11) fait saillie de ladite section de ressort (112.7) dans une direction transversale audit axe longitudinal (112.9) dudit au moins un élément de ressort (112.5, 112.6, 112.13, 112.14), en particulier, le long de ladite direction de torsion ;
- ledit au moins un élément de contact (112.10, 112.11), le long dudit axe longitudinal (112.9) dudit au moins un élément ressort (112.5, 112.6, 112.13, 112.14), est situé à une extrémité libre dudit au moins un élément ressort (112.5, 112.6, 112.13, 112.14) ou à une section centrale dudit au moins un élément ressort (112.5, 112.6, 112.13, 112.14), dans lequel, en particulier, un premier élément de contact (112.10) est situé à ladite section centrale et un deuxième élément de contact (112.11) est situé à une extrémité libre dudit au moins un élément ressort (112.5, 112.6, 112.13, 112.14) ;
- ledit au moins un élément de contact (112.10, 112.11) est intégré de manière monolithique dans ledit au moins un élément ressort (112.5, 112.6, 112.13, 112.14).

4. Unité de train de roulement selon l'une quelconque des revendications 1 à 3, dans laquelle

- ledit au moins un élément ressort (112.5) est un premier élément ressort et ladite unité ressort (112.4) comprend un deuxième élément ressort (112.6), et
- ledit deuxième élément de ressort (112.6) est disposé et agit cinématiquement en série entre ledit premier élément de support (112.1) et ledit deuxième élément de support (112.2) pour assurer ladite compliance dudit agencement de liaison (112, 113) dans une deuxième direction de torsion le long de ladite direction circonférentielle et opposée à ladite première direction de torsion ;

dans lequel, en particulier, au moins l'un du suivant s'applique :

- ledit deuxième élément de ressort (112.6) est configuré d'une manière sensiblement identique audit premier élément de ressort (112.5) ;
- ledit premier élément de ressort (112.5) et ledit deuxième élément de ressort (112.6) sont sous une précontrainte de flexion autour de leur axe de flexion respectif (112.8) dans un état neutre dudit agencement de liaison (112, 113) ;
- ladite unité de ressort (112.4) comprend un troisième élément de ressort (112.13) qui est disposé et agit cinématiquement en parallèle avec ledit premier élément de ressort (112.5) entre ledit premier élément de support (112.1) et ledit deuxième élément de support (112.2) pour assurer ladite compliance dudit agencement de liaison (112, 113) dans ladite première direction de torsion, ledit troisième élément de ressort (112.13), en particulier, étant configuré d'une manière sensiblement identique audit premier élément de ressort (112.5) ;
- ladite unité de ressort (112.4) comprend un quatrième élément de ressort (112.14) qui est disposé et agit cinématiquement en parallèle avec ledit deuxième élément de ressort (112.6) entre ledit premier élément de support (112.1) et ledit deuxième élément de support (112.2) pour assurer ladite compliance dudit agencement de liaison (112, 113) dans ladite deuxième direction de torsion, ledit quatrième élément de ressort (112.14), en particulier, étant configuré d'une manière sensiblement identique audit deuxième élément de ressort (112.6).

5.  Unité de train de roulement selon l'une quelconque des revendications 1 à 4, dans laquelle

- ladite masse de réduction des vibrations de torsion (108.1) est une première masse de réduction des vibrations de torsion ;
- ladite unité de masse de réduction des vibrations de torsion (108, 109) comprend une seconde masse de réduction des vibrations de torsion (109.1) couplée à ladite unité de roue (105) d'une manière cédante en torsion autour dudit axe de rotation (105.3) et configurée pour osciller autour dudit axe de rotation (105.3) en contre-phase par rapport audit composant (105.2, 120.3) de ladite unité de roue (105) pour réduire les vibrations de torsion de ladite unité de roue (105) ;
- ladite seconde masse de réduction des vibrations de torsion (109.1) est couplée à ladite unité de roue (105) via ledit au moins un agencement de liaison de torsion (112, 113), en particulier, via ladite pluralité desdits agencements de liaison de torsion (112, 113) ;
- ledit agencement de liaison de torsion (112, 113) comprend un troisième élément de support (112.16) relié à ladite seconde masse de réduction des vibrations de torsion (109.1) de manière rigide dans ladite direction circonférentielle ;
- ledit au moins un élément de ressort (112.5, 112.6, 112.13, 112.14) est disposé et agit cinématiquement en série entre ledit troisième élément de support (112.16) et l'un dudit premier élément de support (112.1) et dudit second élément de support (112.2) pour assurer le comportement cédant dudit agencement de liaison (112, 113) entre ladite unité de roue (105) et ladite seconde masse de réduction des vibrations de torsion (109.1) au moins dans ladite première direction de torsion le long de ladite direction circonférentielle.

6.  Unité de train de roulement selon la revendication 5, dans laquelle

- ladite section de ressort (112.7) est une première section de ressort et ledit au moins un élément de ressort (112.5, 112.6, 112.13, 112.14) comprend une seconde section de ressort (112.15),

dans lequel au moins l'un du suivant s'applique :

- ladite seconde section de ressort (112.15) est configurée pour assurer ladite comportement cédant dudit agencement de liaison (112, 113) entre ladite unité de roue (105) et ladite seconde masse de réduction des vibrations de torsion (109.1) par un comportement cédant de flexion autour d'un axe de flexion (112.8) qui est au moins sensiblement parallèle à un plan défini par ladite direction radiale et ladite direction circonférentielle ;
- ladite deuxième section de ressort (112.15) se rétrécit le long d'un axe longitudinal (112.9) dudit au moins un élément de ressort (112.5, 112.6, 112.13, 112.14), ladite deuxième section de ressort (112.15), en particulier, au moins l'une parmi (i) se rétrécissant vers ledit troisième élément de support (112.16) et (ii) se rétrécissant en diminuant au moins sa dimension dans ladite direction circonférentielle ;
- ledit au moins un élément ressort (112.5, 112.6, 112.13, 112.14) est configuré pour entrer en contact avec ledit troisième élément de support (112.16) via un troisième élément de contact (112.12), ledit troisième élément de contact (112.12), en particulier, au moins l'un parmi (i) faisant saillie de ladite deuxième section ressort (112.15) dans une direction transversale audit axe longitudinal (112.9) dudit au moins un élément ressort (112.5, 112.6, 112.13, 112.14), (ii) faisant saillie le long de ladite direction de torsion, (iii) étant situé à une extrémité libre dudit au moins un élément ressort (112.5, 112.6, 112.13, 112.14), et (iv) étant intégré de manière monolithique dans ledit au moins un élément ressort (112.5, 112.6, 112.13, 112.14).

7.  Unité de train de roulement selon l'une quelconque des revendications 1 à 6, dans laquelle

- ledit au moins un élément ressort (112.5, 112.6, 112.13, 112.14) est au moins partiellement reçu dans un évidement (112.18) dudit premier élément de support (112.1) ;

dans lequel, en particulier, au moins l'un du suivant s'applique :

- ledit évidement (112.18) est configuré pour recevoir au moins une partie de ladite section de ressort (112.7) avec un jeu suffisant au moins dans ladite direction circonférentielle de telle sorte que ladite section de ressort (112.7) puisse se plier pour fournir ledit comportement cédant en flexion autour dudit axe de flexion (112.8) ;
- ledit évidement (112.18) est l'un d'un alésage allongé et d'une fente allongée dudit premier élément de support (112.1) ;
- ledit évidement (112.18) et/ou ledit premier élément de support (112.1) est formé pour fournir au moins une section de butée dure (112.19, 114.2) configurée pour limiter la flexion dudit au moins un élément de ressort (112.5, 112.6, 112.13, 112.14) autour dudit axe de flexion (112.8) pendant le fonctionnement normal de ladite unité de train de roulement (103).

8. Unité de train de roulement selon l'une quelconque des revendications 1 à 7, dans laquelle au moins l'un du suivant s'applique :

- une rigidité dudit au moins un élément de ressort (112.5, 112.6, 112.13, 112.14) est sélectionnée de telle sorte qu'un moment de torsion maximal à transmettre autour dudit axe de rotation entre ladite masse de réduction des vibrations de torsion et ladite unité de roue (105) pendant le fonctionnement normal de ladite unité de train de roulement (103) est pris exclusivement par déformation élastique dudit au moins un élément de ressort (112.5, 112.6, 112.13, 112.14) dudit au moins un agencement de liaison de torsion (112, 113) ;
- une rigidité dudit au moins un élément de ressort (112.5, 112.6, 112.13, 112.14) est sélectionnée de telle sorte qu'un moment de torsion maximal à transmettre autour dudit axe de rotation entre ladite masse de réduction des vibrations de torsion et ladite unité de roue (105) pendant le fonctionnement normal de ladite unité de train de roulement provoque une déflexion maximale dudit au moins un élément de ressort (112.5, 112.6, 112.13, 112.14), en particulier, dans ladite direction de torsion, de moins de 1,0 mm, de préférence de moins de 0,5 mm, plus préférablement de 0,4 mm à 0,1 mm ;
- une unité de butée dure (112.19, 114.2) est formée, en particulier, par les surfaces de ladite masse de réduction des vibrations de torsion et de ladite unité de roue (105), ladite unité de butée dure (112.19, 114.2) étant configurée pour limiter le mouvement relatif entre ladite masse de réduction des vibrations de torsion (108.1, 109.1) et ladite unité de roue (105) autour dudit axe de rotation (105.3) au cas où un moment de torsion prédéfini, en particulier un moment de torsion maximal, à transmettre autour dudit axe de rotation (105.3) entre ladite masse de réduction des vibrations de torsion (108.1, 109.1) et ladite unité de roue (105) pendant le fonctionnement normal de ladite unité de train de roulement (103) est dépassé ;
- ledit au moins un agencement de liaison en torsion (112, 113) est configuré pour permettre une dilatation induite thermiquement dans ladite direction radiale entre ladite masse de réduction des vibrations de torsion et ladite unité de roue (105).

9. Unité de train de roulement selon l'une quelconque des revendications 1 à 8, dans laquelle

- ladite unité de masse de réduction de vibrations de torsion (108, 109) est une première unité de masse de réduction de vibrations de torsion définissant une première fréquence de résonance de réduction ;
- une seconde unité de masse de réduction des vibrations de torsion (118, 119) est reliée à ladite unité de roue (105), ladite seconde unité de masse de réduction des vibrations de torsion (118, 119) comprenant une autre masse de réduction des vibrations de torsion (119.1) couplée à ladite unité de roue (105) d'une manière cédante en torsion autour dudit axe de rotation (105.3) ;
- ladite seconde unité de masse de réduction des vibrations de torsion (118, 119) définit une seconde fréquence de résonance de réduction d'une oscillation en contre-phase de ladite autre masse de réduction des vibrations de torsion, qui est du même ordre que ladite première fréquence de résonance de réduction et présente un décalage intentionnel par rapport à ladite première fréquence de résonance de réduction, ledit décalage intentionnel dépassant notamment un décalage causé par les tolérances de fabrication maximales définies pour ladite unité de train de roulement,
dans lequel, en particulier,
- ladite au moins une roue (105.2) présente un état non usé et un état complètement usé, où l'échange de ladite au moins une roue (105.2) est requis par un opérateur dudit train de roulement,
- ladite vibration de torsion de ladite unité de roue (105) a une première fréquence de résonance d'unité de roue dans ledit état non usé et une seconde fréquence de résonance d'unité de roue dans ledit état complètement usé, et
- ladite première fréquence de résonance d'unité de roue et ladite seconde fréquence de résonance d'unité de roue définissent un écart de fréquence de résonance de durée de vie d'unité de roue.

**10.** Unité de train de roulement selon la revendication 9, dans laquelle au moins l'un du suivant s'applique :

- ladite première fréquence de résonance de réduction diffère de ladite première fréquence de résonance de l'unité de roue d'au plus 50 %, de préférence d'au plus 25 %, plus préférablement d'au plus 5 % à 15 %, de l'écart de fréquence de résonance de la durée de vie de l'unité de roue ;
- ladite première fréquence de résonance de réduction diffère de ladite première fréquence de résonance d'unité de roue d'au plus 30 %, de préférence d'au plus 20 %, plus préférablement d'au plus 5 % à 15 %, de ladite première fréquence de résonance d'unité de roue, ladite première fréquence de résonance de réduction, en particulier, correspondant au moins sensiblement à ladite première fréquence de résonance d'unité de roue ;
- ladite seconde fréquence de résonance de réduction diffère de ladite seconde fréquence de résonance de l'unité de roue d'au plus 50 %, de préférence d'au plus 25 %, plus préférablement d'au plus 5 % à 15 %, de l'écart de fréquence de résonance de la durée de vie de l'unité de roue ;
- ladite seconde fréquence de résonance de réduction diffère de ladite seconde fréquence de résonance d'unité de roue d'au plus 30 %, de préférence d'au plus 20 %, plus préférablement d'au plus 5 % à 15 %, de ladite seconde fréquence de résonance d'unité de roue, ladite seconde fréquence de résonance de réduction correspondant en particulier sensiblement à ladite seconde fréquence de résonance d'unité de roue.

**11.** Unité de train de roulement selon la revendication 9 ou 10, dans laquelle au moins l'un du suivant s'applique :

- ladite seconde fréquence de résonance de réduction diffère de ladite première fréquence de résonance de réduction de 20 % à 100 %, de préférence de 30 % à 80 %, plus préférablement de 40 % à 70 %, de l'écart de fréquence de résonance de durée de vie de l'unité de roue ;
- ladite seconde fréquence de résonance de réduction diffère de ladite première fréquence de résonance de réduction d'au moins 2 %, de préférence de 5 % à 25 %, plus préférablement de 10 % à 20 %, de ladite première fréquence de résonance de réduction,
- ladite seconde fréquence de résonance de réduction diffère de ladite première fréquence de résonance de réduction d'au moins 2 Hz, de préférence de 5 Hz à 35 Hz, plus préférablement de 10 Hz à 20 Hz,
- ladite première fréquence de résonance de réduction et/ou ladite seconde fréquence de résonance de réduction a une valeur de 25 Hz à 150 Hz, de préférence de 30 Hz à 120 Hz, plus préférentiellement de 55 Hz à 115 Hz.

**12.** Unité de train de roulement selon l'une quelconque des revendications 1 à 11, dans lequel,

- ladite masse de réduction des vibrations de torsion (108.1) est couplée à ladite unité de roue (105) via une liaison d'amortissement (115) assurant l'amortissement de ladite oscillation en contre-phase ;

dans lequel, en particulier, au moins l'un du suivant s'applique :

- ladite liaison d'amortissement (115) comprend un contact de frottement entre ladite masse de réduction des vibrations de torsion et ladite unité de roue (105)
- ladite liaison d'amortissement (115) comprend une paire de surfaces de contact (115.1) définissant une caractéristique d'amortissement par frottement de ladite liaison d'amortissement (115).

**13.** Unité de train de roulement selon l'une quelconque des revendications 1 à 12, dans laquelle au moins l'un du suivant s'applique :

- ladite masse de réduction des vibrations de torsion (108.1) est un disque de frein d'une unité de freinage de ladite unité de roue (105) ;
- ladite masse de réduction des vibrations de torsion (108.1) est couplée à ladite roue, en particulier, à un élément d'âme (105.4) de ladite roue (105.2), ou couplée audit arbre d'unité de roue (105.1), en particulier, à un emplacement éloigné de ladite roue (105.2) ;
- ladite masse de réduction des vibrations de torsion (108.1) est une première masse de réduction des vibrations de torsion couplée à un premier côté de ladite roue (105.2) et une seconde masse de réduction des vibrations de torsion (109.1) est couplée à un second côté de ladite roue (105.2), en particulier, à un élément d'âme (105.4) de ladite roue (105.2) ;
- ladite masse de réduction des vibrations de torsion (108.1) est une première masse de réduction des vibrations de torsion et est couplée à une première roue (105.2) de ladite unité de roue (105) et une seconde masse de réduction des vibrations de torsion (118.1) est couplée à une seconde roue (105.2) de ladite unité de roue (105).

**14.** Train de roulement, notamment pour véhicule ferroviaire, comportant au moins une unité de train de roulement selon l'une quelconque des revendications 1 à 13.

**15.** Procédé de réduction des vibrations de torsion dans un train de roulement, notamment pour véhicule ferroviaire, ledit train de roulement comprenant une unité de roue (105) et une masse de réduction des vibrations de torsion (108, 109). La roue (105) comprend un arbre d'unité de roue et au moins une roue, l'arbre d'unité de roue définissant un axe de rotation (105.3), lequel axe de rotation (105.3) définit une direction axiale et une direction radiale de ladite unité de roue (105) ainsi qu'une direction circonférentielle autour de cet axe de rotation (105.3), ladite roue étant couplée audit arbre d'unité de roue de manière rigide en torsion autour de cet axe (105.3) et est configurée pour rouler sur une voie, le procédé comprenant :

- coupler une masse de réduction des vibrations de torsion à ladite unité de roue (105) d'une manière cédante à la torsion autour dudit axe de rotation (105.3) via au moins un agencement de liaison de torsion cédante dans ladite direction circonférentielle, en particulier, via une pluralité de tels agencements de liaison de torsion répartis le long de ladite direction circonférentielle, définissant ainsi une fréquence de résonance de réduction de ladite oscillation en contre-phase de ladite masse de réduction des vibrations de torsion ;
- permettre à ladite masse de réduction des vibrations de torsion d'osciller autour dudit axe de rotation (105.3) en contre-phase par rapport à un composant (105.2, 120.3) de ladite unité de roue (105), en particulier par rapport à ladite roue, afin de réduire les vibrations de torsion de ladite unité de roue (105) ;

dans lequel
- un premier élément de support (112.1) dudit agencement de liaison en torsion (112, 113) est relié à l'une de ladite unité de roue (105) et de ladite masse de réduction des vibrations de torsion d'une manière rigide dans ladite direction circonférentielle ;
- un deuxième élément de support dudit agencement de liaison en torsion (112, 113) est relié à l'autre élément parmi ladite unité de roue (105) et ladite masse de réduction des vibrations de torsion d'une manière rigide dans ladite direction circonférentielle ;
- au moins un élément ressort dudit dispositif de liaison en torsion (112, 113) agit cinématiquement en série entre ledit premier élément de support (112.1) et ledit second élément de support (112.2) pour assurer ledit comportement cédant dudit dispositif de liaison (112, 113) au moins dans une première direction de torsion le long de ladite direction circonférentielle,

**caractérisé en ce que**
- une section de ressort allongée (112.7) dudit au moins un élément de ressort (112.5, 112.6, 112.13, 112.14), ladite section de ressort (112.7) étant allongée le long de ladite direction axiale, assure ledit comportement cédant dudit agencement de liaison (112, 113) au moins dans ladite première direction de torsion le long de ladite direction circonférentielle par une comportement cédant de flexion autour d'un axe de flexion (112.8) qui est au moins sensiblement parallèle à un plan défini par ladite direction radiale et ladite direction circonférentielle.

Fig. 1

Fig. 2

Fig. 3

Fig. 4

Fig. 5

Fig. 6

Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10336729 A1, Haban
- EP 1551646 B1, Bieker

- EP 2960133 A1, Bieker